# EUROPÄISCHE PATENTANMELDUNG

(11) **EP 4 292 841 A2**
(43) Veröffentlichungstag der Anmeldung: **20.12.2023**
(21) Anmeldenummer: 23020298.8
(22) Anmeldetag: 16.06.2023
(51) Int. Cl.: B60H 1/00

(54) **THERMOMANAGEMENTANORDNUNG UND FAHRZEUG MIT ZUMINDEST EINER SOLCHEN THERMOMANAGEMENTANORDNUNG**

(30) Priorität: 16.06.2022 DE 102022002190; 10.10.2022 DE 202022002213 U; 22.12.2022 DE 102022004859; 22.12.2022 DE 102022004860
(71) Anmelder: Voss Automotive GmbH, 51688 Wipperfürth (DE)
(72) Erfinder: Etscheid, Tobias, 51789 Lindlar (DE); Kohlgrüber, Markus, 51789 Lindlar (DE); Rajan, Philippose, 50999 Köln (DE)
(74) Vertreter: Rebbereh, Cornelia

(57) **Zusammenfassung**

Bei einer Thermomanagementanordnung (1) für ein Fahrzeug, umfassend eine Anzahl elektronisch geregelter und/oder elektrischer Komponenten (10a, 10b, 10n, 11a, 11b, 11n, 12a, 12b, 13a, 13b, 13n) und zumindest eine Fahrzeugsteuerungseinheit (4), wobei zumindest ein Teil der Anzahl elektronisch geregelter und/oder elektrischer Komponenten (10a, 10b, 10n, 11a, 11b, 11n, 12a, 12b, 13a, 13b, 13n) ansteuerbar ist, umfasst die Thermomanagementanordnung (1) zumindest ein Thermomanagement-Modul (2), das die Anzahl elektronisch geregelter und/oder elektrischer Komponenten (10a, 10b, 10n, 11a, 11b, 11n, 12a, 12b, 13a, 13b, 13n), die als eine Baugruppe in räumlicher Nähe zueinander angeordnet sind, umfasst, und ist eine Thermomanagement-Steuerungseinheit (5) vorgesehen, die im Bereich des Thermomanagement-Moduls (2) angeordnet ist und zur Ansteuerung zumindest eines Teils der Anzahl elektronisch geregelter und/oder elektrischer Komponenten (10a, 10b, 10n, 11a, 11b, 11n, 12a, 12b, 13a, 13b, 13n) dient.

## Beschreibung

Die Erfindung betrifft eine Thermomanagementanordnung für ein Fahrzeug, umfassend eine Anzahl elektronisch geregelter und/oder elektrischer Komponenten und zumindest eine Fahrzeugsteuerungseinheit, wobei zumindest ein Teil der Anzahl elektronisch geregelter und/oder elektrischer Komponenten ansteuerbar ist, sowie ein Fahrzeug mit zumindest einer solchen Thermomanagementanordnung.

In heutigen Fahrzeugen, insbesondere Elektrofahrzeugen und Hybridfahrzeugen, sind immer mehr elektronisch geregelte Komponenten, wie beispielsweise elektrisch verstellbare Regelventile, elektrisch verstellbare Pumpen, eine Vielzahl von Sensoren etc., entlang von Fluidkreisläufen, wie Kühlkreisläufen, des Fahrzeugs angeordnet. Hierdurch ergibt sich der Vorteil eines bedarfsgerechten und fahrzustandsoptimierten Thermomanagements, das einerseits den Fahrkomfort, andererseits eine Reichweitenoptimierung unterstützt. Die Vielzahl elektronisch geregelter Komponenten führt allerdings auch dazu, dass die Anzahl der elektrischen Leiter und der Versorgung der einzelnen elektronisch geregelten Komponenten stark zugenommen hat und zu komplexen Kabelbaumstrukturen führt. Die einzelnen elektronisch geregelten Komponenten sind dezentral im Fahrzeug angeordnet, so dass eine große Anzahl elektrischer Leiter innerhalb des Fahrzeugs verlegt werden muss, um jede der elektronisch geregelten Komponenten einzeln mit der Fahrzeugsteuerungseinheit signalzuverbinden. Gerade bei hydraulischen Komponenten eines Fahrzeugs wird deren elektrische Verkabelung durch Einzelverbindung von einer Fahrzeugsteuerungseinheit zu der jeweiligen Komponente ausgeführt, wobei die Einzelkomponente jeweils durch einzelne elektrische Steckverbinder mit den jeweiligen elektrischen Leitern elektrisch verbunden wird. Ferner weist jede der geregelten bzw. gesteuerten Komponenten eine eigene Steuerung bzw. Elektronik auf. Hierdurch ergibt sich die Notwendigkeit des Anordnens und Koordinierens einer großen Menge von Steuerungen bzw. Elektronik hierfür und/oder des Ausbildens sehr komplexer Kabelbaumsätze, die alle im Fahrzeug verlegt werden müssen. Ferner besteht ein erhöhtes Fehlerpotential bei dem Erstellen der Kabelbaumsätze aufgrund von deren Komplexität.

Beispielsweise ist aus der DE 10 2020 206 268 A1 ein Thermomanagementsystem für eine Batterie eines Kraftfahrzeugs, insbesondere eines Elektrofahrzeugs, eines batterieelektrischen Fahrzeugs oder eines Hybridelektrokraftfahrzeugs, bekannt, das eine Steuereinheit, einen ersten Kühlmittelkreislauf, wobei der erste Kühlmittelkreislauf eine Batterie, einen Chiller und eine erste Pumpe aufweist, und einen zweiten Kühlmittelkreislauf umfasst, wobei der zweite Kühlmittelkreislauf einen Zuheizer, einen Heizungswärmetauscher und eine zweite Pumpe aufweist, wobei der erste und der zweite Kühlmittelkreislauf über eine Kopplungsvorrichtung thermisch oder thermisch-fluidisch miteinander gekoppelt sind. Die Steuereinheit ist dabei so ausgebildet, dass die Leistungen der ersten Pumpe und der zweiten Pumpe zur Erfüllung der Anforderungen an ein Thermomanagement geregelt werden. Aus dieser Druckschrift des Standes der Technik lässt sich die Komplexität eines solchen Thermomanagementsystems mit mehreren Kühlkreisläufen mit einer Anzahl von Komponenten, wie Pumpen, Batterien, Zuheizern, etc. entnehmen, wobei die Kühlkreisläufe miteinander gekoppelt und ineinander verschachtelt sind.

Auch aus der US 8,974,942 B2 ist ein sehr komplex aufgebautes Batterie-Thermomanagementsystem bekannt. Dieses umfasst zumindest eine Batterie, eine erste thermoelektrische Anordnung und eine zweite thermoelektrische Anordnung in thermischer Verbindung mit der Batterie, wobei die erste und die zweite thermoelektrische Anordnung jeweils thermoelektrische Geräte enthält und die erste und zweite thermoelektrische Anordnung elektrisch miteinander verbunden sind. Ferner sind die thermoelektrischen Geräte der ersten thermoelektrischen Anordnung in zwei Gruppen, eine erste und eine zweite Gruppe, aufgeteilt, wobei die thermoelektrischen Geräte der ersten Gruppe und die thermoelektrischen Geräte der zweiten Gruppe jeweils zueinander elektrisch parallel geschaltet sind. Die thermoelektrischen Geräte der zweiten thermoelektrischen Anordnung sind ebenfalls in zwei Gruppen aufgeteilt, bei denen die thermoelektrischen Geräte untereinander in entsprechender Weise zueinander parallel geschaltet sind. Die einzelnen thermoelektrischen Geräte enthalten wiederum eine Vielzahl von thermoelektrischen Elementen. Ein elektrisch mit der ersten und zweiten thermoelektrischen Anordnung in elektrischer Verbindung stehender Kreis kann wahlweise die erste thermoelektrische Anordnung entweder in Reihe oder parallel zu der zweiten thermoelektrischen Anordnung als Reaktion auf zumindest einen Parameter schalten, wobei der zumindest eine Parameter zumindest eine Fluidtemperatur eines Fluids, das in thermischer Verbindung mit der Batterie steht, umfasst.

Auch aus der DE 10 2019 210 577 A1 ist ein Thermomanagementsystem zur Verwendung in einem Fahrzeug bekannt, wobei das Thermomanagementsystem einen ersten Kühlkreislauf für eine Batterie und einen zweiten Kühlkreislauf für einen E-Motor zum Antrieb des Fahrzeugs umfasst, wobei die beiden Kühlkreisläufe mittels eines Mehrwegeventils in einem ersten Modus des Systems und in einer ersten Ventilstellung des Mehrwegeventils in Reihe und in einem zweiten Modus des Systems und in einer zweiten Ventilstellung des Mehrwegeventils parallel zueinander geschaltet sind. In einem dritten Modus des Systems und in einer dritten Ventilstellung nimmt das Mehrwegeventil eine Zwischenstellung ein, in welcher sich die Kühlflüssigkeitsströme der beiden Kühlkreisläufe miteinander bedarfsgerecht vermischen. Neben den beiden Kühlkreisläufen ist auch noch ein Bypasspfad vorgesehen, ebenso wie ein weiteres Mehrwegeventil und somit auch weitere Betriebsmodi. Somit ist auch dieses Thermomanagementsystem sehr komplex aufgebaut.

Entsprechendes gilt auch für das aus der DE 10 2020 206 727 A1 bekannte Thermomanagementsystem für eine Batterie eines Kraftfahrzeugs, das ebenfalls einen ersten Kühlmittelkreislauf, einen zweiten Kühlmittelkreislauf und einen dritten Kühlmittelkreislauf umfasst. Der erste Kühlmittelkreislauf wird thermisch-fluidisch wahlweise mit dem zweiten Kühlmittelkreislauf und/oder dem dritten Kühlmittelkreislauf durch Schalten eines Vier-Wege-Ventils gekoppelt. Der erste Kühlmittelkreislauf umfasst eine Batterie, einen Chiller und eine erste Pumpe, der zweite Kühlmittelkreislauf einen Zuheizer, einen Heizungswärmetauscher und eine zweite Pumpe und der dritte Kühlmittelkreislauf einen Wärmeübertrager und eine dritte Pumpe. Die Komplexität des Thermomanagementsystems ist insbesondere auch den Figuren dieser Druckschrift des Standes der Technik sehr gut zu entnehmen.

Eine solche Komplexität eines Thermomanagementsystems kann auch der DE 11 2011 103 888 T5 entnommen werden. Das System gemäß diesem Stand der Technik umfasst einen Verbrennungsmotor und ein erstes Kühlmittel, das mit dem Verbrennungsmotor thermisch gekoppelt ist und durch eine erste Pumpe umgewälzt wird. Es umfasst ferner eine elektrische Komponente und ein zweites Kühlmittel, das mit der elektrischen Komponente thermisch gekoppelt ist und durch eine zweite Pumpe umgewälzt wird. Ferner weist das System einen ersten Wärmetauscher auf, der Wärmeenergie zwischen dem ersten Kühlmittel und dem zweiten Kühlmittel überträgt, und einen Zusatzfluidstrom mit einer Temperatur, die niedriger ist als eine Soll-Betriebstemperatur für die elektrische Komponente. Ferner weist das System einen zweiten Wärmetauscher auf, der Wärmeenergie zwischen dem zweiten Kühlmittel und dem Zusatzfluidstrom überträgt.

Auch der DE 11 2017 000 575 T5 kann die Komplexität eines solchen Thermomanagementsystems sehr gut entnommen werden. Die Thermomanagementvorrichtung für ein Fahrzeug gemäß dieser Druckschrift des Standes der Technik weist einen ersten Wärmeträgerpfadabschnitt und einen zweiten Wärmeträgerpfadabschnitt, durch die ein Wärmeträger strömt, eine Abwärmezuführvorrichtung, die den Wärmeträger, der durch den zweiten Wärmeträgerpfadabschnitt strömt, Abwärme zuführt, einen Erwärmungswärmetauscher, der Wärme zwischen Luft, die in ein Fahrzeuginneres geblasen werden soll, und dem Wärmeträger tauscht, um die Luft zu erwärmen, einen Umschaltabschnitt, der zwischen einem Zustand, in dem der Wärmeträger zwischen dem Erwärmungswärmetauscher und dem ersten Wärmeträgerpfadabschnitt zirkuliert, und einen zweiten Zustand umschaltet, in dem der Wärmeträger zwischen dem Erwärmungswärmetauscher und dem zweiten Wärmeträgerpfadabschnitt zirkuliert, einen Einstellabschnitt, mittels dessen eine Temperatur des Wärmeträgers in dem ersten Wärmeträgerpfadabschnitt eingestellt wird, und ein Steuerungsmittel auf. Das Steuerungsmittel steuert einen Betrieb des Einstellabschnitts so, dass die Temperatur des Wärmeträgers in dem ersten Wärmeträgerpfadabschnitt gleich wie oder höher als eine vorbestimmte Temperatur ist. Wenn der Umschaltabschnitt festgelegt ist, wird der Wärmeträger zwischen dem Erwärmungswärmetauscher und dem zweiten Wärmeträgerpfadabschnitt zirkuliert.

Aus der DE 10 2016 102 116 A1 ist der komplexe Aufbau eines Batterie-Thermomanagementsystems bekannt, wobei dieses eine Batteriebaugruppe und ein Kühlmittelteilsystem, das ein Kühlmittel durch die Batteriebaugruppe zirkulieren lässt, umfasst, wobei die Batteriebaugruppe durch einen ersten Teil des Kühlmittels von einer Kraftmaschine erwärmt wird, wenn eine Temperatur der Batteriebaugruppe unterhalb eines ersten Temperaturschwellenwerts liegt, und durch einen zweiten Teil des Kühlmittels von einem Kühlaggregat gekühlt wird, wenn die Temperatur oberhalb eines zweiten Temperaturschwellwertes liegt. Das Kühlmittelsystem umfasst u.a. die Kraftmaschine, einen Kühler, ein Drei-WegeVentil, einen Temperatursensor, eine Pumpe und einen Kühlaggregatkreislauf, der das Kühlaggregat umfasst. Ersichtlich sind hier auch eine Anzahl von Komponenten in dem Batterie-Thermomanagementsystem enthalten, die über verschiedene Kühlmittelleitungen und elektrische Leiter miteinander bzw. mit der Fahrzeugsteuerungseinheit verbunden sind.

Auch aus der DE 10 2018 107 913 A1 ist ein Temperierungssystem mit einer Temperierungsvorrichtung zum Temperieren einer Antriebsbatterie durch einen flüssigen Wärmeübertrager bekannt, der in Leitungen eines Temperierungskreislaufes zirkuliert. Eine Pumpenbaugruppe der Temperierungsvorrichtung ist in einem Pumpengehäuse aufgenommen, das zugleich ein Gehäuse der Temperierungsvorrichtung bildet. In dem Pumpengehäuse ist ferner eine Heizvorrichtung angeordnet ebenso wie eine Temperierungssteuerungsvorrichtung. Keinerlei Hinweis findet sich in dieser Druckschrift des Standes der Technik zu dem Umgang mit der Vielzahl an elektrischen Leitern zwischen den einzelnen Komponenten innerhalb eines Fahrzeugs.

Aus der WO 2015/149764 A1 ist ein Kühlsystem einer Brennkraftmaschine bekannt, das komplex aufgebaut ist und das als ein Split-Kühlsystem ausgelegt ist und zumindest zwei Kühlkreise umfasst, die von einem Kühlmittelstrom einer Kühlmittelpumpe beaufschlagt werden. Zur Regelung von Kühlmittelströmen der Kühlkreise sind ein als Drehschieber mit zugehöriger Aktuatorik ausgeführtes Wärmemanagementmodul und ein Thermostat eingesetzt. Das Drehschiebergehäuse weist mehrere von Kühlmittel durchströmbare Ausgänge oder Anschlüsse auf. Das Wärmemanagementmodul ist zur Regelung des ersten Kühlkreises des Kühlsystems und das als Split-Kühlthermostat ausgeführte Thermostat zur Regelung des weiteren Kühlkreises vorgesehen. In einzelnen Warmlaufphasen der Brennkraftmaschine sind die Ausgänge, ein als Bypass ausgeführter, mit der Kühlmittelpumpe verbundener Anschluss des Drehschiebergehäuses sowie die Leckageöffnung des Thermostats bedarfsabhängig gemeinsam oder getrennt gezielt absperrbar.

Durch die Vielzahl an Komponenten der Kühlkreisläufe eines Thermomanagementsystems mit einer Vielzahl an Steuerungseinrichtungen und somit auch die Vielzahl an elektrischen Leitern, um eine Signalverbindung von den elektronisch geregelten Komponenten und von deren Steuerungseinrichtungen zur Fahrzeugsteuerungseinheit herzustellen, und/oder eine Vielzahl an einzelnen Steuerungen bzw. Elektronik seitens der einzelnen elektronisch geregelten oder gesteuerten Komponenten ist das Designen geeigneter Anordnungen der Anzahl von elektronisch geregelten Komponenten und der geeigneten Verlegungswege elektrischer Leiter innerhalb der Karosserie des Fahrzeugs sehr anspruchsvoll und das Handling der Kabelbäume sehr aufwendig. Während der Montage ist es erforderlich, jede der Komponenten einzeln über deren Steckverbinder elektrisch anzuschließen, was auch mit einem hohen Zeitaufwand verbunden ist. Für den Fall, dass einzelne Komponenten während der Lebensdauer des Fahrzeugs ausfallen, ist deren Austausch ebenfalls sehr zeitaufwendig und die Komponenten sind ggf. schlecht zugänglich im Fahrzeug eingebaut. Auch die Buslast eines Fahrzeug-Datenbusses, über den die Steuerung der einzelnen Busteilnehmer, somit elektronisch geregelten und/oder elektrischen Komponenten des Fahrzeugs von der Fahrzeugsteuerungseinheit aus erfolgt, ist sehr hoch. Da die einzelnen elektronisch geregelten Komponenten von unterschiedlichsten Herstellern seitens des Fahrzeugherstellers eingekauft werden, ist auch der Verwaltungsaufwand sehr hoch und hierbei insbesondere das Schnittstellenhandling beim Kombinieren der Komponenten sehr aufwendig. Diese Problematiken können auch nicht mit dem aus der WO 00/71388 A1 bekannten elektrischen Verdrahtungssystem für einen Verbrennungsmotor mit Getriebe eines Fahrzeugs gelöst werden, da bei diesem zwar eine zentrale Verteilungseinheit vorgesehen ist, bei der erste elektrische Verbindungen zwischen Fahrzeug und Verteilungseinheit und zweite elektrische Verbindungen zwischen Verteilungseinheit und Funktionsaggregaten der Antriebseinheit oder Funktionsaggregaten in einem umgebenden Motorraum verbinden. Die ersten und zweiten elektrischen Verbindungen sind jeweils als elektrisch verzweigungsfreie Punkt-zu-Punkt-Verbindungen ausgebildet und die Verschaltungen zwischen den ersten und den zweiten elektrischen Verbindungen in der zentralen Verteilungseinheit, wobei die zentrale Verteilungseinheit an dem Verbrennungsmotor oder an Anbauteilen des Motors angeordnet ist und eine Steuerungsplattform mit einer elektronischen Steuerungsbaugruppe umfasst, die Motorsteuerungsfunktionen bzw. Getriebesteuerungsfunktionen übernimmt. Bei dem elektrischen Verdrahtungssystem sind Verbindungsleitungen zu verschiedenen Funktionsaggregaten des Verbrennungsmotors und des Getriebes vorgesehen, die die Verteilungseinheit mit diesen Funktionsaggregaten verbinden. Über die Verteilungseinheit erfolgt lediglich eine Aufteilung der elektrischen Verdrahtungen. Ferner bezieht sich dieser Stand der Technik auf Verbrennungsmotoren mit Getriebe eines Fahrzeugs, so dass sich darin keinerlei Hinweise zur Lösung der vorstehenden sich auf die Vielzahl von Komponenten von Kühlkreisläufen eines Thermomanagementsystems eines Elektrofahrzeugs bzw. batterieelektrisch betriebenen Fahrzeugs bzw. Brennstoffzellenfahrzeugs beziehenden Problematiken finden, das eine Vielzahl an elektronisch geregelten Komponenten, Steuerungseinrichtungen von diesen und elektrischen Leitern, die eine Signalverbindung zwischen den elektronisch geregelten Komponenten und der Fahrzeugsteuerungseinheit herstellen, umfasst.

Aus der DE 10 2006 010 640 A1 ist ein elektronisches Steuerungssystem zum Einsatz in einem Kraftfahrzeug oder einer mobilen Arbeitsmaschine bekannt, das ein Steuergerät und weitere mit dem Steuergerät verbundene Elektronikkomponenten und einen Kabelstrang umfasst, der das Steuergerät mit den Elektronikkomponenten verbindet und der einen Stecker aufweist, mit dem er an einer Anschlussbuchse des Steuergeräts angeschlossen werden kann. In einem Gehäuse des Steckers ist ein Halbleiterspeicherbaustein angeordnet, wobei der Halbleiterspeicherbaustein über an den Stecker geführte Signalleitungen mit dem Steuergerät verbunden werden kann. Auch aus dieser Druckschrift des Standes der Technik kann keine Lösung für die vorstehende Problematik einer Vielzahl von Komponenten von Kühlkreisläufen eines Thermomanagementsystems mit einer Vielzahl von Steuerungseinrichtungen und elektrischen Leitern, um eine Signalverbindung von den elektronisch geregelten Komponenten zur Fahrzeugsteuerungseinheit herzustellen, entnommen werden, da sich diese Druckschrift des Standes der Technik nicht auf diese Problematik bezieht.

Entsprechendes gilt auch für die Fahrzeugkabelbaumstruktur gemäß der DE 11 2017 001 003 T5. Diese umfasst einen ersten Kabelbaum, der konfiguriert ist, um eine erste elektrische Komponente und einen Hauptsteuerfunktionsabschnitt miteinander zu verbinden, wobei die erste elektrische Komponente an einem Fahrzeug befestigt ist und der Hauptsteuerfunktionsabschnitt die erste elektrische Komponente steuert. Ferner umfasst die Fahrzeugkabelbaumstruktur einen zweiten Kabelbaum, dessen eines Ende mit dem Hauptsteuerfunktionsabschnitt verbunden ist, wobei der zweite Kabelbaum einen Untersteuerfunktionsabschnitt aufweist, der an dem anderen Ende des zweiten Kabelbaums vorgesehen ist, um eine zweite elektrische Komponente zu steuern, die an dem Fahrzeug montiert ist. Ferner ist ein dritter Kabelbaum offenbart, dessen eines Ende mit dem zweiten Kabelbaum verbunden ist, wobei der dritte Kabelbaum einen Untersteuerfunktionsabschnitt aufweist, der an dem anderen Ende des dritten Kabelbaums vorgesehen ist, um eine dritte elektrische Komponente, die an dem Fahrzeug montiert ist, zu steuern. Es sind somit auch hier verschiedene Kabelbäume offenbart, jedoch keinerlei Hinweis gegeben, wie deren Handling in einem Fahrzeug im Hinblick auf die Verlegewege verbessert und wie insbesondere bei einer Vielzahl von Komponenten der Kühlkreisläufe eines Thermomanagementsystems mit einer Vielzahl an Steuerungseinrichtungen und elektrischen Leitern, um die Signalverbindungen zwischen den elektronisch geregelten Komponenten und der Fahrzeugsteuerungseinheit herzustellen, durchgeführt werden könnte.

Der vorliegenden Erfindung liegt daher die Aufgabe zugrunde, eine Thermomanagementanordnung für ein Fahrzeug sowie ein Fahrzeug mit einer solchen Thermomanagementanordnung zu schaffen, wobei die Thermomanagementanordnung eine Anzahl elektronisch geregelter und/oder elektrischer Komponenten und zumindest eine Fahrzeugsteuerungseinheit umfasst, wobei zumindest ein Teil der Anzahl elektronisch geregelter und/oder elektrischer Komponenten ansteuerbar ist, die die vorstehend genannten Nachteile nicht aufweist und die eine deutlich weniger komplex aufgebaute Ansteuerung der einzelnen elektronisch geregelten und/oder elektrischen Komponenten ermöglicht als die Thermomanagementanordnungen des Standes der Technik.

Die Aufgabe wird für eine Thermomanagementanordnung nach dem Oberbegriff des Anspruchs 1 dadurch gelöst, dass die Thermomanagementanordnung zumindest ein Thermomanagement-Modul umfasst, das die Anzahl elektronisch geregelter und/oder elektrischer Komponenten, die als eine Baugruppe in räumlicher Nähe zueinander angeordnet sind, umfasst, und dass eine Thermomanagement-Steuerungseinheit vorgesehen ist, die im Bereich des Thermomanagement-Moduls angeordnet ist und zur Ansteuerung zumindest eines Teils der Anzahl elektronisch geregelter und/oder elektrischer Komponenten dient. Für ein Fahrzeug, insbesondere Elektrofahrzeug, batterieelektrisches Fahrzeug oder Brennstoffzellenfahrzeug, wird die Aufgabe dadurch gelöst, dass das Fahrzeug zumindest eine solche Thermomanagementanordnung umfasst. Weiterbildungen der Erfindung sind in den abhängigen Ansprüchen definiert.

Dadurch wird eine Thermomanagementanordnung für ein Fahrzeug geschaffen, die zumindest ein Thermomanagement-Modul umfasst, in dem die Anzahl elektronisch geregelter und/oder elektrischer Komponenten als eine Baugruppe in räumlicher Nähe zueinander angeordnet sind. Ferner umfasst die Thermomanagementanordnung eine Thermomanagement-Steuerungseinheit, die im Bereich des Thermomanagement-Moduls angeordnet ist und zur Ansteuerung zumindest eines Teils der Anzahl elektronisch geregelter und/oder elektrischer Komponenten dient. Durch das Vorsehen einer solchen Thermomanagement-Steuerungseinheit ist es möglich, diese zentral anzuordnen, wobei die Thermomanagement-Steuerungseinheit dazu dient, alle oder zumindest einen Teil der Anzahl elektronisch geregelter und/oder elektrischer Komponenten anzusteuern. Hierdurch entfällt das Vorsehen einer jeweiligen Steuerungseinrichtung seitens der einzelnen elektronisch geregelten und/oder elektrischen Komponenten, als insbesondere in Anordnung an diesen, so dass der Aufbau der Thermomanagementanordnung deutlich weniger komplex ist als bei den Lösungen des Standes der Technik.

Unter einer Thermomanagementanordnung wird hier die Untergruppe eines Thermomanagementsystems verstanden, die die elektronisch geregelten und/oder elektrischen Komponenten und Thermomanagement-Steuerungseinheit sowie die Fahrzeugsteuerungseinheit und die elektrische(n) Verbindung(en) zwischen dieser und dem Thermomanagement-Modul bzw. der Thermomanagement-Steuerungseinheit umfasst. Unter dem Anordnen der Anzahl an elektronisch geregelten und/oder elektrischen Komponenten als eine Baugruppe in räumlicher Nähe zueinander wird hier vorliegend verstanden, dass die einzelnen elektronisch geregelten und/oder elektrischen Komponenten, beispielsweise zumindest eine Pumpe, zumindest ein Sensor, zumindest ein Aktuator, zumindest ein Ventil, etc., optimal dicht bzw. nahe beieinander angeordnet sind und als Baugruppe das zumindest eine Thermomanagement-Modul bilden. Alle elektronisch geregelten und/oder elektrischen Komponenten des Thermomanagement-Moduls sind auf einem Trägerteil angeordnet. Hierdurch ist es möglich, sie optimal dicht bzw. nahe beieinander anzuordnen. Durch das Vorsehen des Trägerteils des Thermomanagement-Moduls ist es möglich, die Anzahl an elektronisch geregelten und/oder elektrischen Komponenten bauraumoptimiert außerhalb eines Fahrzeugs auf dem Trägerteil vorzumontieren. Das Thermomanagement-Modul ist somit kompakt ausgeführt, wobei alle Komponenten des Thermomanagement-Modules, d.h. elektrische Leitungen, Fluidleitungen, Pumpe(n), Ventil(e) etc. auf oder in dem Trägerteil angeordnet sind. Die kompakte Ausführung des Thermomanagement-Moduls erweist sich als sehr vorteilhaft, da je nach Ausführung des batterieelektrisch betriebenen oder Elektrofahrzeugs oder Brennstoffzellenfahrzeugs, das Thermomanagement-Modul an verschiedenen Stellen im Fahrzeug angeordnet werden kann, z.B. an unterschiedlichen Stellen bei einem elektrisch betriebenen Fahrzeug mit einer vergleichsweise sehr kleinen oder bei einem mit einer vergleichsweise sehr großen Fahrzeugbatterie. Der Trägerteil bzw. das Thermomanagement-Modul kann in jeder beliebigen räumlichen Anordnung in einem Fahrzeug angeordnet werden, z.B. in einer waagerechten Anordnung im Raum.

Die Thermomanagement-Steuerungseinheit ist vorteilhaft mit der zumindest einen Fahrzeugsteuerungseinheit zur Kommunikation mit dieser signalverbindbar oder signalverbunden und durch diese ansteuerbar. Es werden die einzelnen elektronisch geregelten und/oder elektrischen Komponenten des Thermomanagement-Moduls mit der Thermomanagement-Steuerungseinheit im Thermomanagement-Modul signalverbunden und andererseits die Thermomanagement-Steuerungseinheit mit der zumindest einen Fahrzeugsteuerungseinheit, so dass lediglich eine Signalverbindung, insbesondere Signalleitung, sich zwischen der Thermomanagement-Steuerungseinheit und der zumindest einen Fahrzeugsteuerungseinheit erstreckt. Weiter vorteilhaft ist zumindest eine digitale Kommunikationsbusleitung zur Signalverbindung der Thermomanagement-Steuerungseinheit und der zumindest einen Fahrzeugsteuerungseinheit vorgesehen.

Die Thermomanagement-Steuerungseinheit ist vorteilhaft zum Ansteuern zumindest eines Aktuators und/oder zumindest eines Sensors und/oder zumindest einer Pumpe ausgebildet. Ein solcher Sensor kann beispielsweise ein Temperatursensor, ein Drucksensor, Durchflusssensor oder eine andere Art eines Sensors, der in einem Thermomanagementsystem verwendet wird, sein. Minimal kann die Thermomanagement-Steuerungseinheit zum Ansteuern zumindest eines Stellantriebs bzw. Aktuators der Thermomanagementanordnung bzw. des Thermomanagement-Moduls ausgebildet sein und/oder zum Ansteuern zumindest eines Sensors des Thermomanagement-Moduls. Die Thermomanagement-Steuerungseinheit kann somit zum Ansteuern unterschiedlicher elektronisch geregelter und/oder elektrischer Komponenten dienen bzw. zum Ansteuern einer Anzahl von mehr als einer Kategorie elektronisch geregelter und/oder elektrischer Komponenten, wie beispielsweise mehrerer Stellantriebe bzw. Aktuatoren und/oder von ein oder mehreren Pumpen.

Weiter vorteilhaft kann auch zumindest eine außerhalb der Thermomanagementanordnung angeordnete elektronisch geregelte Komponente mit der Thermomanagement-Steuerungseinheit signalverbindbar oder signalverbunden sein zum Ansteuern der außerhalb der Thermomanagementanordnung angeordneten elektronisch geregelten Komponente durch die Thermomanagement-Steuerungseinheit. Somit ist es möglich, über die Thermomanagement-Steuerungseinheit auch außerhalb des Thermomanagement-Moduls angeordnete elektronisch geregelte Komponenten ebenfalls anzusteuern. Die insbesondere zentral angeordnete Thermomanagement-Steuerungseinheit kann somit bezüglich des Thermomanagement-Moduls dezentral angeordnete elektronische Komponenten ansteuern bzw. deren erfasste Signale verarbeiten. Dementsprechend können auch dezentral angeordnete Steuerungseinheiten der jeweiligen dezentral angeordneten elektronischen Komponenten durch Vorsehen der Thermomanagement-Steuerungseinheit eingespart werden. Hierdurch können nicht nur Kosten für dementsprechend nicht benötigte Steuerungseinheiten an solcher dezentral angeordneten elektronischen Komponenten eingespart werden, sondern auch eine noch effizientere Ansteuerung solcher elektronisch geregelter Komponenten erfolgen, die insbesondere abgestimmt ist auf die Ansteuerung der elektronisch geregelten und/oder elektrischen Komponenten innerhalb des Thermomanagement-Moduls.

Zur Energieversorgung der Thermomanagement-Steuerungseinheit kann diese mit zumindest einer Energiequelle, insbesondere dem Bordnetz eines Fahrzeugs, elektrisch verbindbar oder verbunden sein. Insbesondere ist es möglich, in einen elektrischen Leiterstrang mit einer Anzahl verschiedener elektrischer Leiter, der sich von dem Thermomanagement-Modul bzw. dessen Thermomanagement-Steuerungseinheit zur Fahrzeugsteuerungseinheit erstreckt, auch eine solche elektrische Leitung zur Energieversorgung der Thermomanagement-Steuerungseinheit mit zu integrieren. Ein solcher elektrischer Leiterstrang kann somit sowohl zumindest einen Signalleiter zum Ansteuern der zentralen Thermomanagement-Steuerungseinheit durch insbesondere die Fahrzeugsteuerungseinheit und zur Kommunikation mit dieser enthalten als auch zumindest einen elektrischen Leiter zur Energieversorgung. Ebenso ist es möglich, zumindest eine separate elektrische Verbindung zur Stromversorgung der Thermomanagement-Steuerungseinheit und/oder der elektronisch geregelten und/oder elektrischen Komponenten des Thermomanagement-Moduls vorzusehen.

Die Thermomanagement-Steuerungseinheit ist vorteilhaft in das zumindest eine Thermomanagement-Modul integriert. Unter einer solchen Integration der Thermomanagement-Steuerungseinheit in das zumindest eine Thermomanagement-Modul wird sowohl der Einbau in ein solches Thermomanagement-Modul verstanden, insbesondere in ein Gehäuse von diesem, sofern ein solches vorhanden ist, als auch ein Anordnen im Bereich des Thermomanagement-Moduls, beispielsweise auf oder an einem Gehäuse oder einer Trägerplatte des Thermomanagement-Moduls. Ebenfalls ist es möglich, bei Vorsehen eines elektrischen Sammelverbinders seitens des Thermomanagement-Moduls die Thermomanagement-Steuerungseinheit in den elektrischen Sammelverbinder des Thermomanagement-Moduls zu integrieren oder an diesem anzuordnen oder im Bereich des elektrischen Sammelverbinders anzuordnen. Das Versehen des zumindest einen Thermomanagement-Moduls mit einem solchen elektrischen Sammelverbinder, wobei die Anzahl elektronisch geregelter und/oder elektrischer Komponenten des Thermomanagement-Moduls elektrisch mit dem elektrischen Sammelverbinder des zumindest einen Thermomanagement-Moduls verbindbar oder verbunden ist und ein elektrischer Leiterstrang zwischen dem elektrischen Sammelverbinder des Thermomanagement-Moduls und/oder der Thermomanagement-Steuerungseinheit und der Fahrzeugsteuerungseinheit anordbar oder angeordnet ist, erweist sich zum Einsparen einer Vielzahl einzelner elektrischer Leiter, die sich zwischen dem Thermomanagement-Modul und der Fahrzeugsteuerungseinheit erstrecken bzw. dem Anordnen mehrerer elektrischer Verbinder seitens des Thermomanagement-Moduls als vorteilhaft, da lediglich ein elektrischer Verbinder endseitig an dem elektrischen Leiterstrang in den elektrischen Sammelverbinder des zumindest einen Thermomanagement-Moduls eingesteckt zu werden braucht. Insbesondere kann daher die Thermomanagement-Steuerungseinheit in diesen elektrischen Sammelverbinder integriert sein bzw. an oder auf diesem oder im Bereich von diesem elektrischen Sammelverbinder angeordnet werden. Hierdurch ist es möglich, eine noch weitere Reduzierung des erforderlichen Bauraums zu erzielen, da im Bereich des Thermomanagement-Moduls kein weiterer Bauraum zum Anordnen der Thermomanagement-Steuerungseinheit mehr erforderlich ist. Zur elektrischen Energieversorgung zumindest eines Teils der elektronisch geregelten und/oder elektrischen Komponenten des Thermomanagement-Moduls und/oder der Thermomanagement-Steuerungseinheit kann ferner das Thermomanagement-Modul mit zumindest einem zusätzlichen elektrischen Verbinder versehen und zumindest eine elektrische Stromleitung an diesen anschließbar oder angeschlossen sein oder werden. Somit ist es möglich, zumindest einen weiteren elektrischen Verbinder an dem Thermomanagement-Modul vorzusehen, an den zumindest eine elektrische Leitung zur Stromversorgung der Thermomanagement-Steuerungseinheit und/oder der Komponenten des Thermomanagement-Moduls angeschlossen werden kann. Der elektrische Sammelverbinder dient dann entweder ausschließlich dem Anschließen von Daten- und Steuerleitungen und nicht dem Anschließen elektrischer Stromleitung(en) oder nur zum Anschließen bestimmter elektrischer Stromleitungen. Beispielsweise kann für Pumpen und Aktuatoren eine solche separate elektrische Stromleitung vorgesehen und an das Thermomanagement-Modul angeschlossen werden. Anstelle nur eines elektrischen Sammelverbinders und nur eines elektrischen Leiterstrangs kann somit zusätzlich zu diesem zumindest ein elektrischer Verbinder zum Anschließen einer elektrischen Stromleitung an dem Thermomanagement-Modul vorgesehen werden.

Die Thermomanagement-Steuerungseinheit ist, wie bereits erwähnt, durch die Fahrzeugsteuerungseinheit ansteuerbar. Zusätzlich oder alternativ kann die Thermomanagement-Steuerungseinheit einen eigenen Regelalgorithmus zur Mediumverteilung zu und von der Anzahl elektronisch geregelter und/oder elektrischer Komponenten und zwischen diesen umfassen. Das Thermomanagement-Modul kann somit eine abgeschlossene Einheit bilden mit klarer Zuordnung der Zuständigkeiten, die den einzelnen elektronisch geregelten und/oder elektrischen Komponenten zukommt. Die Thermomanagement-Steuerungseinheit als zentrale Regelelektronik übernimmt die Ansteuerung bzw. Regelung aller Komponenten des Thermomanagement-Moduls einerseits und andererseits die Kommunikation mit der zumindest einen Fahrzeugsteuerungseinheit. Die Thermomanagement-Steuerungseinheit kann daher beispielsweise durch einen Mikrokontroller gebildet sein, der eine Regelungssoftware umfasst, die eine gewünschte Mediumverteilung innerhalb des Thermomanagementsystems bzw. der Thermomanagementanordnung ermöglicht durch Ansteuerung bzw. Regelung der einzelnen elektronisch geregelten und/oder elektrischen Komponenten des Thermomanagement-Moduls.

Die insbesondere in das Thermomanagement-Modul integrierte insbesondere im Bereich von dessen elektrischen Sammelverbinder angeordnete Thermomanagement-Steuerungseinheit kann als zentrale Regeleinrichtung des Thermomanagement-Moduls die Anzahl an zwischen den einzelnen elektronisch geregelten und/oder elektrischen Komponenten und der zumindest einen Fahrzeugsteuerungseinheit verlegten elektrischen Leiter deutlich reduzieren. Die Anzahl elektronisch geregelter und/oder elektrischer Komponenten des Thermomanagement-Moduls können mit dem vorgesehenen elektrischen Sammelverbinder innerhalb des Thermomanagement-Moduls elektrisch und signalverbunden werden. Es können somit relativ kurze elektrische Leiter innerhalb des Thermomanagement-Moduls vorverlegt werden, so dass das Verlegen einzelner elektrischer Leiter innerhalb des Fahrzeugs von jeder der elektronisch geregelten und/oder elektrischen Komponenten zur zumindest einen Fahrzeugsteuerungseinrichtung entfällt. Da die Thermomanagement-Steuerungseinheit ebenfalls im Bereich des Thermomanagement-Moduls, insbesondere in dessen elektrischen Sammelverbinder, angeordnet ist, ist es möglich, lediglich einen einzigen elektrischen Leiterstrang zwischen dem elektrischen Sammelverbinder am Thermomanagement-Modul und der zumindest einen Fahrzeugsteuerungseinheit zu verlegen. Somit reduziert sich der Aufwand für die Führung solcher elektrischer Leiter innerhalb des Fahrzeugs. Ferner ist lediglich ein einzelner Vorgang seitens des Fahrzeugherstellers erforderlich, da lediglich der elektrische Leiterstrang in den elektrischen Sammelverbinder des Thermomanagement-Moduls einerseits und andererseits der zumindest einen Fahrzeugsteuerungseinheit eingesteckt zu werden braucht. Da lediglich die eine Thermomanagement-Steuerungseinheit vorgesehen ist, reduziert sich auch die Fehleranfälligkeit, die ansonsten bei jeweils einzelnen elektronisch geregelten Komponenten zugeordneten Steuerungseinheiten auftreten kann und üblicherweise eine aufwendige Fehlersuche bedeutet. Dieses Problem tritt bei Vorsehen der zentral angeordneten Thermomanagement-Steuerungseinheit nicht mehr auf.

Ferner können auch die Kosten für die Thermomanagementanordnung reduziert werden, da anstelle von vielen Steuerungseinheiten, die im Stand der Technik an bzw. im Bereich der Anzahl an elektronisch geregelten Komponenten angeordnet wären, nun lediglich eine Thermomanagement-Steuerungseinheit vorgesehen ist. Hierdurch erfolgt auch eine Optimierung von Redundanzen. Ferner ist es möglich, eine Gewichtsreduzierung zu erzielen, da die große Anzahl an einzelnen Steuerungseinheiten an den einzelnen elektronisch geregelten Komponenten entfällt. Auch kann der Bauraum im Vergleich zu den Lösungen des Standes der Technik, bei denen die elektronisch geregelten Komponenten jeweils mit ihren eigenen Steuerungseinheiten versehen sind, reduziert werden, da diese Steuerungseinheiten bei Vorsehen der Thermomanagement-Steuerungseinheit, die zentral angeordnet ist und die Ansteuerung der elektronisch geregelten Komponenten übernimmt, die einzelnen Steuerungseinheiten bei diesen eingespart werden können. Insbesondere ist lediglich noch ein Mikrocontroller als Thermomanagement-Steuerungseinheit vorgesehen, was eine deutliche Bauteilreduzierung mit sich bringt. Die Thermomanagement-Steuerungseinheit kann dahingehend ausgebildet sein, dass die für unterschiedliche elektronisch geregelte und/oder elektrische Komponenten vorgesehenen Leistungsstufen bei der Ansteuerung jeweils komponentenspezifisch zusammengefasst werden, so dass eine jeweils an die Komponenten angepasste Ansteuerung erfolgen kann. Ferner ist es möglich, Sensoren, wie beispielsweise Temperatursensoren, ohne ein zusätzliches eigenes Gehäuse oder einen eigenen elektrischen Steckverbinder auszubilden, da dieser Teil des Thermomanagement-Moduls sein und somit innerhalb des Thermomanagement-Moduls mit dessen elektrischen Sammelverbinder und über diesen mit der Thermomanagement-Steuerungseinheit verbunden werden kann. Ein Übermitteln der Daten, die der Sensor, insbesondere Temperatursensor, erfasst, an die zumindest eine Fahrzeugsteuerungseinheit kann dementsprechend über den elektrischen Leiterstrang zwischen der zumindest einen Fahrzeugsteuerungseinheit und dem zumindest einen Thermomanagement-Modul erfolgen.

Da sich lediglich ein elektrischer Leiterstrang zwischen der Fahrzeugsteuerungseinheit und dem Thermomanagement-Modul erstrecken kann, können auch weitere Schnittstellen im Bereich der Fahrzeugsteuerungseinheit reduziert werden, was die Montage beim Fahrzeugsteller einerseits vereinfacht und andererseits die Montagezeit verkürzt. Ferner können auch die physikalischen Schnittstellen seitens der Fahrzeugsteuerungseinheit reduziert werden, wie die I/O-Pins bzw. Stifte am Controller, die PINs an der Fahrzeugsteuerungseinheit etc. Durch die Thermomanagement-Steuerungseinheit kann ebenfalls die Regelung der einzelnen elektronisch geregelten und/oder elektrischen Komponenten des Thermomanagement-Moduls optimiert werden, da es möglich ist, beispielsweise die Regelung von Bewegungsabläufen zum Erreichen von Schaltzuständen von Ventilen der Thermomanagementanordnung bzw. von deren Thermomanagement-Modul für mehrere Komponenten zu übernehmen. Hierbei kann über eine optimierte Reihenfolge der Ansteuerungen eine besonders gute und schnelle Befüllung mit Medium erzielt werden. Ebenfalls ist es durch das Vorsehen der Thermomanagement-Steuerungseinheit im Thermomanagement-Modul bzw. in dessen Bereich möglich, die Mediumtemperierung, insbesondere Fluidtemperierung, einer Leistungselektronik als einer Komponente des Thermomanagementsystems direkt im Thermomanagement-Modul vorzunehmen. Dadurch ist es nicht notwendig, einen separaten Fluidkreislauf vorzusehen, über den eine solche Temperierung der Leistungselektronikkomponente erfolgt, wie dies im Stand der Technik erforderlich ist. Besonders vorteilhaft kann daher das zumindest eine Thermomanagement-Modul als elektronisch geregelte und/oder elektrische Komponenten zumindest eine Pumpe mit Elektromotor und zumindest ein Ventil mit Aktuator umfassen, insbesondere zumindest eine Pumpe mit Elektromotor, zumindest ein Ventil mit Aktuator und zumindest einen Sensor. Diese elektronisch geregelten und/oder elektrischen Komponenten können vorteilhaft in baulicher Einheit und/oder auf oder an zumindest einer mit fluidischen Leitern, insbesondere Fluidkanälen, und fluidischen Anschlüssen versehenen Einheit zum Versorgen fluidischer Komponenten des Thermomanagement-Moduls mit zumindest einem fluidischen Medium angeordnet sein. Das Thermomanagement-Modul wird über die fluidischen Anschlüsse an Fluidkreisläufe des Fahrzeug-Thermomanagementsystems angeschlossen, wobei die einzelnen Teilkreisläufe des Thermomanagementsystems des Fahrzeugs fluidisch gesteuert werden können. Hierbei kann dementsprechend ein Teilkreislauf zum Temperieren der Fahrzeugelektronik, ein Teilkreislauf zum Temperieren der Batterie des Fahrzeugs und ein Teilkreislauf zum Temperieren des Innenraums des Fahrzeugs vorgesehen sein, wobei das Thermomanagement-Modul bzw. dessen Thermomanagement-Steuerungseinheit zum Regeln bzw. Steuern der Teilmassenströme in den einzelnen Teilkreisläufen dient. Das Fahrzeug kann beispielsweise ein Elektrofahrzeug (BEV = Battery Electric Vehicle), also ein batterieelektrisches Fahrzeug, oder ein Brennstoffzellenfahrzeug (FC Fahrzeug) sein. Die Thermomanagementanordnung findet somit in einem elektrisch bzw. batterieelektrisch betriebenen Fahrzeug Verwendung. Dabei werden durch das Thermomanagement-Modul und die an diesem angeordnete Thermomanagement-Steuerungseinheit zumindest zwei Teilkreisläufe bzw. Regelkreise gesteuert, insbesondere drei Teilkreisläufe, ein Fahrzeugbatteriekühlungsteilkreislauf, ein Komfort-Teilkreislauf für die Fahrzeuginnenraumheizung etc. und ein Teilkreislauf mit Elektromotor, Inverter, Charger.

Das Thermomanagement-Modul umfasst vorteilhaft zumindest ein Trägerteil bzw. tragendes Strukturbauteil, auf dem zumindest eine Komponente zur Temperiermediumförderung und zumindest eine Komponente zur Massenstromregelung des Temperiermediums, wie beispielsweise von Kühlmittel als Temperiermedium, angeordnet werden können oder angeordnet sind bzw. in das diese Komponenten integriert werden können oder sind. Über das Thermomanagement-Modul bzw. dessen zumindest einen Trägerteil können vorzugsweise zumindest zwei der Teilkreisläufe des Temperierkreislaufs fluidisch miteinander verbunden werden, besonders bevorzugt drei Teilkreisläufe des Temperierkreislaufs. Es ist sowohl ein fludisches Verbinden der einzelnen Teilkreisläufe miteinander als auch ein fluidisches Trennen der einzelnen Teilkreisläufe voneinander möglich, je nach Stellung des zumindest einen Ventils, das bzw. die auf und/oder an dem zumindest einen Trägerteil des Thermomanagement-Moduls angeordnet wird/werden und zum Steuern bzw. Regeln der Massenströme an Temperiermedium, wie Kühlmittel, dient/dienen. Die Vor- und Rückläufe der zumindest zwei, insbesondere der zumindest drei, Teilkreisläufe sind über das Thermomanagement-Modul fluidisch miteinander verbindbar oder verbunden. Unter den Teilkreisläufen werden vorzugsweise solche verstanden, die in sich geschlossen sind, somit z.B. kein Kurzschluss zu einem anderen Teilkreislauf vorliegt und die jeweils über Vor- und Rücklauf an das Thermomanagement-Modul angeschlossen sein können oder angeschlossen sind. Das Thermomanagement-Modul bzw. dessen zumindest eines Trägerteil umfasst somit nicht nur elektrische, sondern vorteilhaft auch fluidische Verbindungswege, insbesondere Fluidkanäle, zum fluidischen Verbinden der Teilkreisläufe, die an diesem anschließbar sind oder angeschlossen werden, und ebenso zumindest eine Komponente zur Temperiermediumförderung, wie zumindest eine Pumpe, und zumindest eine Komponente zur Massenstromregelung, wie zumindest ein Ventil. Die zumindest eine Komponente zur Massenstromregelung und die zumindest eine Komponente zur Temperiermediumförderung können übliche Standardkomponenten sein, die auf, an oder in dem zumindest einen Trägerteil des Thermomanagement-Moduls angebracht werden. Das Trägerteil des Thermomanagement-Moduls bietet somit eine Struktur zur Anbringung dieser Standardkomponenten.

Die von den Sensoren als elektronisch geregelten und/oder elektrischen Komponenten des Thermomanagement-Moduls erfassten Daten können durch die Thermomanagement-Steuerungseinheit direkt eingelesen und verarbeitet werden. Da dies nicht mehr in der Fahrzeugsteuerungseinheit erfolgen muss, kann die Buslast des Datenbusses innerhalb des Fahrzeugs reduziert werden. Auch die Leistung der zumindest einen Fahrzeugsteuerungseinheit kann hierdurch reduziert werden, da dezentral die Verarbeitung dieser Sensordaten in der Thermomanagement-Steuerungseinheit erfolgt. Durch die Digitalisierung der Sensorsignale bereits in der Thermomanagement-Steuerungseinheit ist es ferner möglich, ohne zusätzlichen Einzelkostenaufwand digitale Signale zu erhalten, die direkt verarbeitet und ggf. an die zumindest eine Fahrzeugsteuerungseinheit über einen digitalen Kommunikationsbus übermittelt werden können. Insbesondere ist es hierbei auch möglich, Kosten für digitale Einzelsensoren einzusparen, da kostengünstige analoge Einzelsensoren im Thermomanagement-Modul verwendet werden können. Da auch eine Signalverbindung von außerhalb des Thermomanagement-Moduls angeordneten Sensoren zu der Thermomanagement-Steuerungseinheit möglich ist, können auch deren Signale und Kennwerte durch die Thermomanagement-Steuerungseinheit verarbeitet werden. Dies ist insbesondere bei system relevanten Sensoren vorteilhaft, da deren Signale von der Thermomanagement-Steuerungseinheit erfasst und der Ansteuerung der einzelnen Komponenten des Thermomanagement-Moduls zugrundegelegt werden können. Es kann somit bei der Ansteuerung der einzelnen Komponenten des Thermomanagement-Moduls direkt auf die von den system relevanten Sensoren erfassten Daten reagiert werden.

Wie bereits vorstehend erwähnt, ist es möglich, dass das Thermomanagement-Modul über die Thermomanagement-Steuerungseinheit über einen digitalen Kommunikationsbus, wie beispielsweise CAN-Bus oder LIN-Bus, mit der zumindest einen Fahrzeugsteuerungseinheit des Fahrzeugs kommuniziert. Insbesondere ist ein Ansteuern der Thermomanagement-Steuerungseinheit durch die zumindest eine Fahrzeugsteuerungseinheit möglich oder aber entsprechende Regelalgorithmen zur Mediumsteuerung sind bereits in der Thermomanagement-Steuerungseinheit gespeichert, so dass diese selbstständig eine entsprechende Regelung bzw. Ansteuerung der Fluidverteilung/Mediumverteilung durch Ansteuern der entsprechenden Komponenten innerhalb des Thermomanagement-Moduls vornehmen kann. Beispielsweise kann in der Thermomanagement-Steuerungseinheit eine Zustandstabelle hinterlegt werden, die es dem Fahrzeughersteller ermöglicht, über einen einzigen Befehl mehrere Ventile in eine gewünschte Position zu bringen. Beispielsweise bei Stapelventilen (Stack Valves) sind Zusatzbewegungen erforderlich, um in die jeweils definierten Schaltzustände der Ventilteile des Stapelventils zu gelangen. Das Ansteuern dieser Zusatzbewegungen wird vorteilhaft von der Thermomanagement-Steuerungseinheit übernommen, so dass sich der Aufwand auf Seiten des Fahrzeugherstellers diesbezüglich reduziert und ebenfalls die Buslast des Datenbusses, der zur Fahrzeugsteuerungseinheit führt, ebenfalls reduziert werden kann. Ferner kann durch das Vorsehen der Thermomanagement-Steuerungseinheit im Bereich des oder im Thermomanagement-Modul eine Fehlersicherheit bezüglich der einzelnen elektronisch geregelten und/oder elektrischen Komponenten des Thermomanagement-Moduls geschaffen werden. Dies bezieht sich insbesondere auf das Ein- und Ausschalten von Pumpen bei einem Zustandswechsel der Ventile, das Verhindern eines auf Blockfahrens der Komponenten, das Abstimmen der Ansteuerungen der einzelnen elektronisch geregelten und/oder elektrischen Komponenten des Thermomanagement-Moduls aufeinander und untereinander sowie aller Bewegungen von Aktuatoren und Ventilen. Ferner kann eine mechanische Kopplung der Ventile anstelle einer elektronischen vorgesehen werden bzw. ein umschaltbares Getriebe alternativ zu Stellgliedern bzw. Aktuatoren. Durch mechanisches Koppeln der einzelnen Ansteuerungsmöglichkeiten der Ventile des Thermomanagement-Moduls ist durch einen einzigen Befehl das zeitgleiche Verstellen mehrerer Ventile des Thermomanagement-Moduls möglich.

Die autarke Einheit des Thermomanagement-Moduls kann insbesondere zentral im Fahrzeug angeordnet werden. Sie kann zudem vorteilhaft alle zum Fördern von Medium, wie Kühlmittel, zu und von den einzelnen Komponenten des Thermomanagement-Moduls erforderlichen fluidischen Leitungen zusätzlich zu den elektrischen Leitern umfassen, wobei das Kühlmittel durch verschiedene Kühlmittelkreisläufe strömt bzw. strömen kann, um Fahrzeugkomponenten, wie zumindest eine Fahrzeugbatterie, ggf. vorhandene elektrische Zuheizer, Leistungselektronik etc. in einer gewünschten Weise zu temperieren.

Das Thermomanagement-Modul kann bereits vollständig vorkonfektioniert werden, also inklusive aller elektronisch geregelten und/oder elektrischen Komponenten, fluidischen Leiter, elektrischen Leiter und fluidischen Anschlüsse sowie des elektrischen Sammelverbinders und der Thermomanagement-Steuerungseinheit. Dieses Thermomanagement-Modul kann im Fahrzeug als eine kompakte Einheit angeordnet und über den elektrischen Leiterstrang mit der Fahrzeugsteuerungseinheit elektrisch bzw. signalverbunden werden.

Zu der näheren Erläuterung der Erfindung werden im Folgenden Ausführungsbeispiele von dieser näher anhand der Zeichnungen beschrieben. Diese zeigen in:

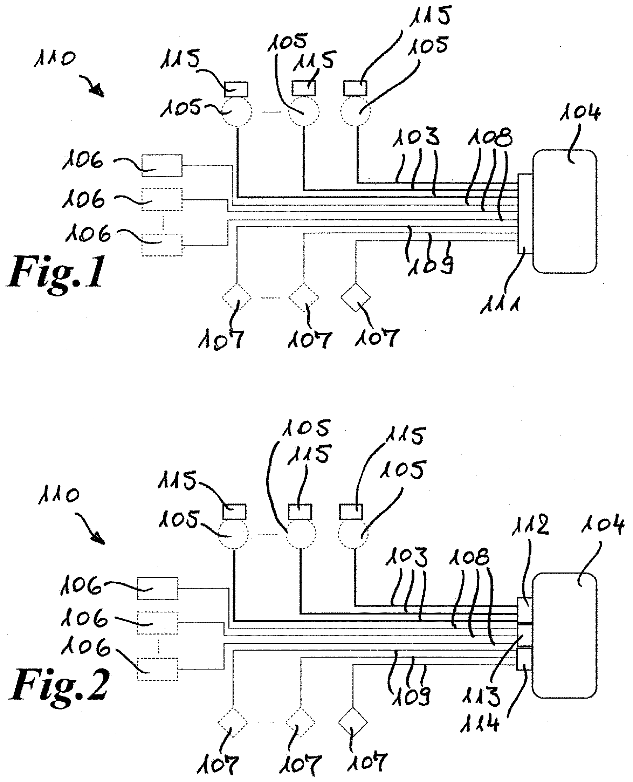

- Figur 1: eine Prinzipskizze einer Thermomanagementanordnung des Standes der Technik, umfassend eine Anzahl von n Pumpen, n Aktuatoren und n Sensoren, die jeweils einzeln über elektrische Leiter mit einem elektrischen Sammelverbinder einer Fahrzeugsteuerungseinheit elektrisch verbunden sind, wobei die Pumpen und Ventile jeweils eigene Steuerungseinheiten aufweisen,
- Figur 2: eine Prinzipskizze einer Variante einer Thermomanagementanordnung des Standes der Technik, bei der eine Anzahl von n Pumpen, n Aktuatoren und n Sensoren jeweils einzeln elektrisch mit drei elektrischen Sammelverbindern einer Fahrzeugsteuerungseinheit elektrisch verbunden sind, wobei die Pumpen und Ventile jeweils eigene Steuerungseinheiten aufweisen,

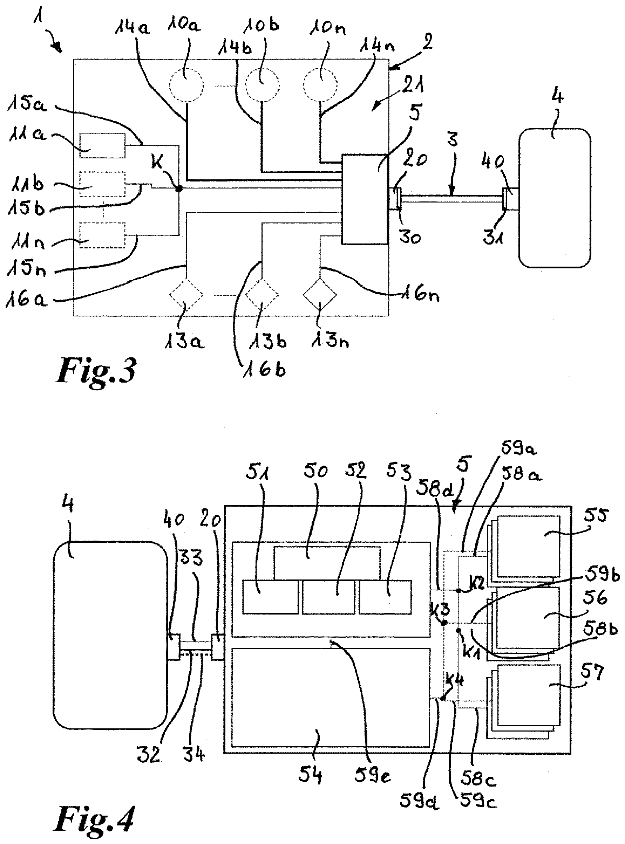

- Figur 3: eine Prinzipskizze einer ersten Ausführungsform einer erfindungsgemäßen Thermomanagementanordnung, umfassend ein Thermomanagement-Modul mit einer Anzahl von n Pumpen, n Aktuatoren und n Sensoren sowie einem elektrischen Sammelverbinder, der über einen elektrischen Leiterstrang mit einem elektrischen Sammelverbinder einer Fahrzeugsteuerungseinheit elektrisch verbunden ist, und einer erfindungsgemäßen Thermomanagement-Steuerungseinheit, die in das Thermomanagement-Modul integriert ist,
- Figur 4: eine Prinzipskizze des Aufbaus einer erfindungsgemäßen Thermomanagement-Steuerungseinheit eines erfindungsgemäßen Thermomanagement-Moduls einer erfindungsgemäßen Thermomanagementanordnung, wobei die Thermomanagement-Steuerungseinheit mit einer Fahrzeugsteuerungseinheit über einen elektrischen Leiterstrang, umfassend unterschiedliche elektrische Leiter, elektrisch verbunden ist,

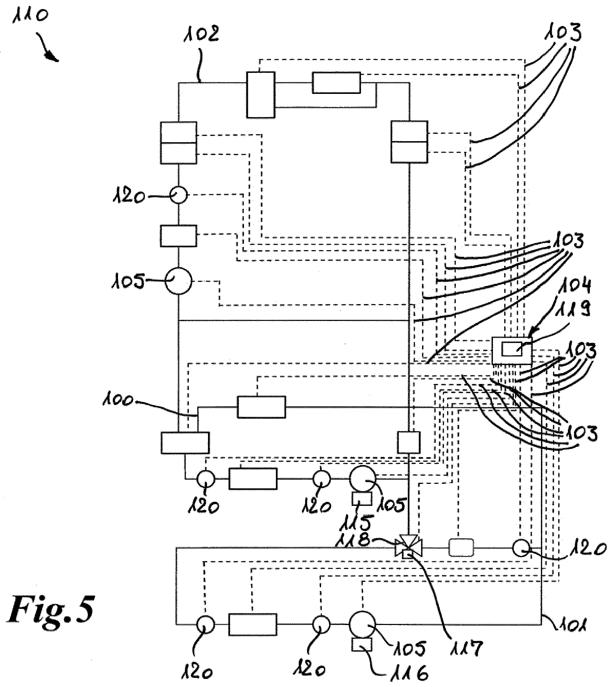

- Figur 5: eine Prinzipskizze eines Thermomanagementsystems des Standes der Technik, umfassend mehrere verschachtelte Kühlkreisläufe eines Fahrzeugs mit jeweils einzelnen elektrischen Leitern, die von den einzelnen Komponenten der Kühlkreisläufe zu einer Fahrzeugsteuerungseinheit führen,

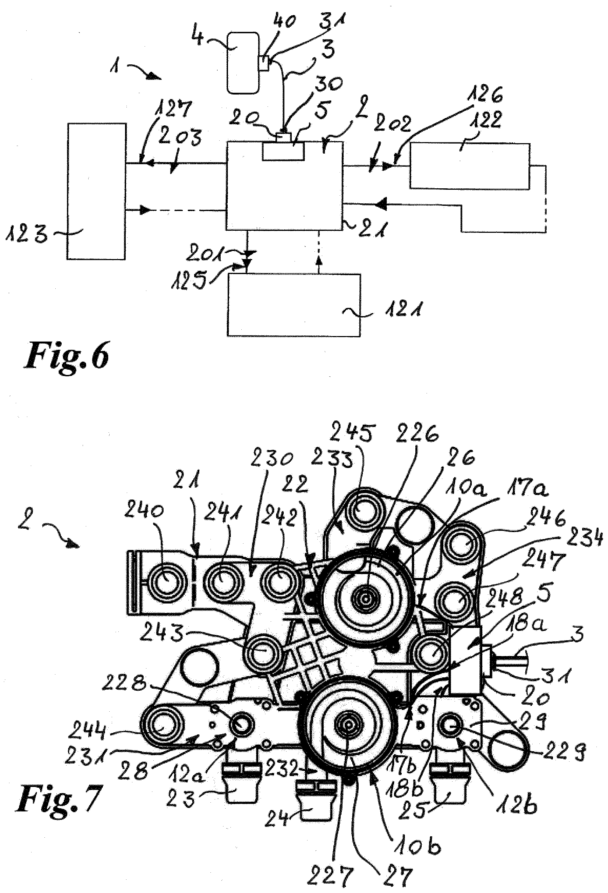

- Figur 6: eine Prinzipskizze einer Ausführungsform eines erfindungsgemäßen Thermomanagementanordnung mit einem erfindungsgemäßen Thermomanagement-Modul und drei an diesem angeschlossenen T ei lkreisläufen,
- Figur 7: eine Draufsicht auf eine Ausführungsform eines erfindungsgemäßen Thermomanagement-Moduls mit zwei Pumpen und zwei Ventilen, und

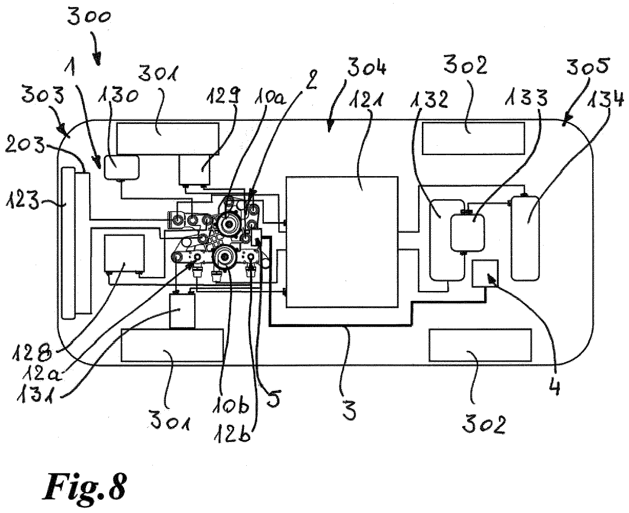

- Figur 8: eine skizzenhafte Draufsicht auf ein Fahrzeug mit einer erfindungsgemäßen Thermomanagementanordnung mit mehreren Teilkreisläufen und einem erfindungsgemäßen Thermomanagement-Modul.

In Figur 5 ist eine Prinzipskizze eines Thermomanagementsystems 110 des Standes der Technik gezeigt mit einer großen Anzahl von elektronisch geregelten und elektrischen Komponenten. Diese Komponenten sind insbesondere ein bzw. mehrere Batterien, Steuereinheiten 115, 116, 117, 119, Chiller, Pumpen 105, elektrische Zuheizer, Heizwärmetauscher, Ventile 118, Sensoren 120, Elektromotoren und Leistungselektronik. In dem in Figur 5 gezeigten Beispiel eines Thermomanagementsystems 110 sind mehrere Kühlkreisläufe 100, 101, 102 ineinander verschachtelt gezeigt. Ferner ist eine große Anzahl von elektrischen Leitern 103 gezeigt, die jeweils von den einzelnen Komponenten der drei Kühlkreisläufe 100, 101, 102 zu einer Fahrzeugsteuerungseinheit 104 verlegt sind. Diese elektrischen Leiter 103 umfassen Stromleiter, Signalleiter, Datenleiter und müssen innerhalb eines Fahrzeugs bzw. der Fahrzeugkarosserie in geeigneter Art und Weise untergebracht werden, so dass sich sehr komplexe Kabelbaumstrukturen ergeben. Je höher die Anzahl der Komponenten in den Kühlkreisläufen ist, desto komplexer werden die Kabelbaumstrukturen und der Platzbedarf für diese. Ferner ist auch der Platzbedarf für die jeweiligen elektronisch geregelten Komponenten, wie den Pumpen 105 und Ventilen 118, durch deren jeweils zusätzlich vorgesehene Steuerungseinheiten 115, 116, 117, 119 vergleichsweise groß.

In den Figuren 1 und 2 sind Varianten des Thermomanagementsystems 110 des Standes der Technik gezeigt, wobei dieses jeweils mehrere Pumpen 105, Aktuatoren 106 und Sensoren 107 umfasst. Jede der Pumpen 105, weist ihre eigene Steuerungseinheit 115 auf. Jede der Pumpen 105, Aktuatoren 106 und Sensoren 107 ist bei der Variante des Standes der Technik nach Figur 1 über den elektrischen Sammelverbinder 111 mit der Fahrzeugsteuerungseinheit 104 elektrisch verbunden bzw. bei der Variante nach Figur 2 mit drei einzelnen elektrischen Verbindern 112, 113 und 114 der Fahrzeugsteuerungseinheit 104. Wie den Figuren 1 und 2 unschwer zu entnehmen ist, muss eine große Anzahl an Steuerungseinheiten und elektrischen Leitern 103, 108, 109 innerhalb eines Fahrzeugs, in dem das Thermomanagementsystem 110 angeordnet ist, verlegt werden, wobei die elektrischen Leiter u.a. Signalleiter und Datenleiter umfassen, um die von den Sensoren erfassten Signale zur Fahrzeugsteuerungseinheit 104 und deren Steuersignale zur Ansteuerung der Aktuatoren 106 an diese senden zu können. Aufgrund der großen Anzahl an einzelnen Komponenten und Steuereinheiten von diesen sowie elektrischen Leitern sind mit dem Einbau von diesen in ein Fahrzeug ein sehr hoher Arbeitsaufwand und auch hohe Kosten für die große Anzahl an einzelnen Komponenten und unterschiedlichen elektrischen Leitern, die alle zur Fahrzeugsteuerungseinheit 104 verlegt werden müssen, und ein hoher Aufwand im Zusammenhang mit dem Verlegen von diesen in dem Fahrzeug verbunden.

In Figur 3 ist eine erste Ausführungsform einer erfindungsgemäßen Thermomanagementanordnung 1 gezeigt. Bei dieser ist die vorstehend erläuterte Problematik des Standes der Technik behoben, da alle Pumpen 10a, 10b bis 10n, Aktuatoren 11a, 11b bis 11n und Sensoren 13a, 13b bis 13n in räumlicher Nähe zueinander angeordnet und als Baugruppe zu einem Thermomanagement-Modul 2 zusammengefasst sind. Der Zusatz "n" steht hier für eine unbestimmte bzw. beliebige Anzahl an Pumpen bzw. Aktuatoren bzw. Sensoren. Das Thermomanagement-Modul 2 umfasst neben diesen elektronisch gesteuerten und/oder elektrischen Komponenten der Pumpen 10a, 10b bis 10n, Aktuatoren 11a, 11b bis 11n und Sensoren 13a, 13b bis 13n ferner eine Thermomanagement-Steuerungseinheit 5, die in das Thermomanagement-Modul 2 integriert ist. Diese dient der Ansteuerung der einzelnen Komponenten der Pumpen 10a, 10b bis 10n, Aktuatoren 11a, 11b bis 11n und Sensoren 13a, 13b bis 13n. Daher sind alle diese Komponenten mit der Thermomanagement-Steuerungseinheit 5 über elektrische Leiter 15a, 15b, 15n bzw. elektrische Leiterpaare 14a, 14b, 14n, 16a, 16b, 16n elektrisch verbunden. Zum elektrischen und Signalverbinden der Thermomanagement-Steuerungseinheit 5 mit der Fahrzeugsteuerungseinheit 4 wird lediglich ein elektrischer Leiterstrang 3 innerhalb des Fahrzeugs von dem Thermomanagement-Modul 2 zu der Fahrzeugsteuerungseinheit 4 hin verlegt. Um einen einheitlichen Anschluss für alle Komponenten des Thermomanagement-Moduls 2 vorzusehen, weist das Thermomanagement-Modul 2 ferner einen elektrischen Sammelverbinder 20 auf. Über diesen sind die von den Komponenten des Thermomanagement-Moduls 2 zur Thermomanagement-Steuerungseinheit 5 verlegten elektrischen Leiter und Leiterpaare mit einem elektrischen Leiterstrang 3 verbunden. Anstelle eines elektrischen Leiterstrangs, umfassend alle elektrischen, Signal- und Datenleiter, kann auch zumindest eine separate Stromleitung vorgesehen und an das Thermomanagement-Modul 2 über einen daran angeordneten elektrischen Verbinder oder den elektrischen Sammelverbinder angeschlossen werden. Über diese Stromleitung kann insbesondere zumindest ein Teil der Komponenten des Thermomanagement-Moduls 2 mit elektrischer Energie versorgt werden. Die elektrische Energieversorgung erfolgt dann für diese nicht von der Fahrzeugsteuerungseinheit 4, sondern unabhängig davon. Die Kommunikation und Ansteuerung erfolgt jedoch weiterhin zwischen der Fahrzeugsteuerungseinheit 4 und der Thermomanagement-Steuerungseinheit 5. Insbesondere können die Pumpen und Aktuatoren über eine solche separate Stromleitung mit elektrischer Energie versorgt werden.

Die Fahrzeugsteuerungseinheit 4 gemäß Figur 3 weist ebenfalls einen elektrischen Sammelverbinder 40 auf. An diesen wird oder ist der elektrische Leiterstrang 3 angeschlossen. Anstelle dieses einen elektrischen Sammelverbinders 40 kann die Fahrzeugsteuerungseinheit 4 mehr als einen elektrischen Verbinder aufweisen, beispielsweise drei einzelne elektrische Verbinder, mit denen der elektrische Leiterstrang 3 bzw. dessen jeweilige elektrische Leiter und Leitergruppen elektrisch verbunden sind/werden.

Aufgrund des Vorsehens der Thermomanagement-Steuerungseinheit 5 liegt gegenüber dem Stand der Technik nicht mehr die komplette Intelligenz bezüglich der Steuerung bei der Fahrzeugsteuerungseinheit 4, sondern zumindest für die Komponenten des Thermomanagement-Moduls 2 bei der Thermomanagement-Steuerungseinheit 5. Diese kann auf die Pumpen 10a, 10b, 10n und Ventile sowie Aktuatoren 11a, 11b, 11n und Sensoren 12a, 12b, 12n zugreifen und diese entsprechend in der gewünschten Weise ansteuern und die von den Sensoren erfassten Daten empfangen und ggf. auch verarbeiten und/oder zur Fahrzeugsteuerungseinheit 4 senden. Die Thermomanagement-Steuerungseinheit 5 kann beispielsweise als Mikrocontroller ausgebildet sein. In der Thermomanagement-Steuerungseinheit 5 kann eine klare und eindeutige Zuordnung der Zuständigkeiten innerhalb des Thermomanagement-Moduls 2 festgelegt werden oder sein. Die Thermomanagement-Steuerungseinheit 5 dient somit einerseits der Steuerung bzw. Regelung aller elektronisch geregelten und/oder elektrischen Komponenten des Thermomanagement-Moduls 2, insbesondere mittels einer Regelsoftware, andererseits der Kommunikation mit der Fahrzeugsteuerungseinheit 4 eines Fahrzeugs. Sie kann von extern durch die Fahrzeugsteuerungseinheit 4 gesteuert werden, kann zusätzlich oder alternativ eigene Regelalgorithmen zur Verteilung von Medium bzw. zur Fluidverteilung innerhalb der Fluidwege und Fluidkreisläufe des Thermomanagementsystems 1 eines Fahrzeugs enthalten.

Wie den Figuren 3 und 4 zu entnehmen ist, ist es bei der Thermomanagementanordnung 1 möglich, den elektrischen Leiterstrang 3 als einzigen Leiterstrang zwischen dem Thermomanagement-Modul 2 bzw. dessen Thermomanagement-Steuerungseinheit 5 und der Fahrzeugsteuerungseinheit 4 vorzusehen bzw. anzuordnen, somit den Arbeitsaufwand für das Verlegen von elektrischen Leitern innerhalb des Fahrzeugs so gering wie möglich zu halten. Es wird lediglich der elektrische Leiterstrang 3 innerhalb des Fahrzeugs von dem Thermomanagement-Modul 2 zu der Fahrzeugsteuerungseinheit 4 hin verlegt.

Der elektrische Leiterstrang 3 umfasst unterschiedliche Arten von elektrischen Leitern 32, 33, 34, wie Figur 4 entnommen werden kann, wobei der elektrische Leiter 32 z.B. zum Leiten hoher elektrischer Ströme beispielsweise als Leistungsstromleiter ausgebildet ist, um die Pumpen 10a, 10b, 10n mit Strom zu versorgen, und der elektrische Leiter 33 z.B. zum Übertragen von Signalen als Busleiter ausgebildet ist, um Daten und Signale, wie Ansteuerungssignale, von der Fahrzeugsteuerungseinheit 4 an die Thermomanagement-Steuerungseinheit 5 und umgekehrt zu übermitteln. Dieser elektrische Leiter 33 oder zumindest ein weiterer elektrischer Leiter kann ferner zum Übertragen von Sensorsignalen der Sensoren 12a, 12b, 12n geeignet ausgebildet sein. Ein elektrischer Leiter 34 kann ferner zum Leiten elektrischer Ströme zur Stromversorgung der Thermomanagement-Steuerungseinheit 5 vorgesehen sein, wobei ein Speisen z.B. durch die Bordnetzspannung eines Fahrzeugs erfolgen kann. Auch dieser elektrische Leiter 34 kann Teil des elektrischen Leiterstrangs 3 sein, wie Figur 4 zu entnehmen ist. Insbesondere ist es möglich, als Daten- und/oder Steuerleitung(en) zumindest ein optisches Kabel zu verwenden. Der elektrische Sammelverbinder 20 am Thermomanagement-Modul 2 und der elektrische Sammelverbinder 40 an der Fahrzeugsteuerungseinheit 4 sind in diesem Falle entsprechend zum Anschließen zumindest eines solchen optischen Kabels ausgebildet.

Der elektrische Sammelverbinder 40 der Fahrzeugsteuerungseinheit 4 ist so ausgebildet, dass diese unterschiedlichen elektrischen Leiter dort angeschlossen werden können. Der elektrische Sammelverbinder 40 weist somit unterschiedlich ausgebildete Steckverbinder auf, um die unterschiedlichen elektrischen Leiter dort anschließen zu können. Ebenfalls sind elektrische Verbinder 30, 31 (siehe Figur 3), wie beispielsweise elektrische Steckverbinder, die endseitig an dem elektrischen Leiterstrang 3 angeordnet sind, in entsprechender Weise ausgebildet, um eine Signalübertragung bzw. Übertragung von Strömen, auch von hohen elektrischen Strömen, zu ermöglichen.

Innerhalb eines Fahrzeugs, in dem die Thermomanagementanordnung 1 angeordnet ist, ist es somit nicht erforderlich, komplexe Kabelbäume zu verlegen, sondern lediglich den elektrischen Leiterstrang 3 von dem Thermomanagement-Modul 2 bzw. dessen Thermomanagement-Steuerungseinheit 5 zu der Fahrzeugsteuerungseinrichtung 4. Dies bedeutet einen deutlich geringeren Aufwand sowohl an Zeit als auch an Geld im Vergleich zu einer jeweiligen einzelnen Verkabelung und dem Vorsehen einer größeren Anzahl an einzelnen Steuerungseinheiten an den elektronisch geregelten und/oder elektrischen Komponenten im Stand der Technik, wie beispielsweise in Figur 5 wiedergegeben.

Die Thermomanagement-Steuerungseinheit 5 kann in das Thermomanagement-Modul 2 integriert sein. Insbesondere ist es möglich, die Thermomanagement-Steuerungseinheit 5 in den elektrischen Sammelverbinder 20 des Thermomanagement-Moduls 2 zu integrieren oder auf oder an diesem anzuordnen.

Figur 4 zeigt lediglich die Thermomanagement-Steuerungseinheit 5 und die Fahrzeugsteuerungseinheit 4, die über den elektrischen Leiterstrang 3 mit der Thermomanagement-Steuerungseinheit 5 elektrisch und signalverbunden ist. Wie bereits vorstehend erläutert, umfasst der elektrische Leiterstrang 3 unterschiedliche Arten von elektrischen Leitern 32, 33, 34, die in Figur 4 angedeutet sind.

Die Thermomanagement-Steuerungseinheit 5 umfasst, wie Figur 4 weiter entnommen werden kann, eine Hauptsteuerungseinheit 50, die beispielsweise in Form eines Mikrocontrollers ausgebildet sein kann. Die Hauptsteuerungseinheit 50 umfasst eine Kommunikationseinrichtung 51, eine Signalverarbeitungseinrichtung 52 und eine Stufensteuerungseinrichtung 53 zum Steuern von Ausgangsleistungsstufen. Ferner umfasst die Thermomanagement-Steuerungseinheit 5 eine Einheit 54 zur gemeinsamen Stromversorgung und zum Spannungsschutz sowie zur EMC-Filterung, somit zum Abschirmen. Ferner umfasst die Thermomanagement-Steuerungseinheit 5 eine oder mehrere Sensorelektronikeinheiten 55 für die Belegung der Eingabe- und Ausgabe-Pins, ein oder mehrere Aktuator-Leistungsstufen 56 und ein oder mehrere Pumpenleistungsstufen 57. Die Sensorelektronikeinheiten 55, Aktuator-Leistungsstufen 56 und Pumpenleistungsstufen 57 sind jeweils sowohl mit der Hauptsteuerungseinheit 50 als auch mit der Einheit 54 der Thermomanagement-Steuerungseinheit 5 elektrisch und signalverbunden. Die entsprechenden Signal- bzw. Datenleitungen 58a, 58b, 58c und 58d erstrecken sich zwischen der Hauptsteuerungseinheit 50 und der zumindest einen Sensorelektronikeinheit 55, der zumindest einen Aktuator-Leistungsstufe 56 und der zumindest einen Pumpenleistungsstufe 57. Elektrische Leitungen 59a, 59b, 59c und 59d erstrecken sich zur Stromversorgung der Sensorelektronikeinheit(en) 55, der Aktuator-Leistungsstufe(n) 56 und der Pumpenleistungsstufe(n) 57 zwischen diesen und der Einheit 54. Dies kann ebenfalls in Figur 4 sehr gut entnommen werden. Im jeweiligen Knotenpunkt K1 und K2 sind jeweils die Signal- bzw. Datenleitungen 58a, 58b und 58c zusammengeführt und werden über die lediglich eine Signal- bzw. Datenleitung 58d mit der Hauptsteuerungseinheit 50 verbunden, während die elektrischen Leitungen 59a, 59b und 59c im Knotenpunkt K3 bzw. K4 zusammengeführt und auf die elektrische Leitung 59d geführt sind, die eine Verbindung zur Einheit 54 herstellt. Zur Stromversorgung der Hauptsteuerungseinheit 50 ist ebenfalls eine elektrische Leitung 59e zwischen der Hauptsteuerungseinheit 50 und der Einheit 54 vorgesehen. Die Einheit 54 kann beispielsweise über das Bordnetz eines Fahrzeugs mit elektrischer Energie versorgt werden, wobei die entsprechende elektrische Zuführleitung ebenfalls Teil des elektrischen Leiterstrangs 3 sein kann.

Um eine Störung der Signalübertragung durch hohe Ströme zu vermeiden, kann beispielsweise eine getrennte Leistungsstromversorgung vorgesehen werden. Die EMC-Filterung in der Einheit 54 dient ebenfalls der Abschirmung, um Fehler in der Signalübertragung innerhalb des Thermomanagement-Moduls 2, jedoch auch zwischen der Thermomanagement-Steuerungseinheit 5 und der Fahrzeugsteuerungseinheit 4 zu vermeiden. Innerhalb des Thermomanagement-Moduls 2 können ferner elektrische Leiter und Leiterpaare dahingehend optimal vorverlegt werden, dass entsprechende elektromagnetische Einstreuungen durch hohe Ströme im Bereich der Signal- und Datenleitungen vermieden werden können.

In der Hauptsteuerungseinheit 50 der Thermomanagement-Steuerungseinheit 5 können eigene Regelalgorithmen zur Fluidverteilung bzw. Mediumverteilung innerhalb von Fluidkreisläufen vorgesehen werden. In diesem Falle kann auch ohne eine externe Ansteuerung durch die Fahrzeugsteuerungseinheit 4 die Thermomanagement-Steuerungseinheit 5 selbstständig die einzelnen Komponenten der Sensoren, Aktuatoren und Pumpen in entsprechender Weise ansteuern, um die gewünschte Fluidverteilung innerhalb der einzelnen Fluidkreisläufe des Thermomanagementsystems eines Fahrzeugs zu erzielen. Ferner ist es möglich, in der Hauptsteuerungseinheit 50, insbesondere einem Mikrocontroller, eine Zustandstabelle zu hinterlegen, die es ermöglicht, über einen einzigen Befehl mehrere Ventile in eine gewünschte Position zu verbringen.

Das Thermomanagement-Modul 2 kann somit ein oder mehrere Pumpen mit Elektromotor, ein oder mehrere Ventile mit Aktuator und insbesondere ein oder mehrere Sensoren umfassen, die in einer baulichen Einheit und/oder auf einer Trägerplatte oder einem Trägerteil 21 angeordnet (siehe insbesondere Figur 7) und mit zumindest einem Fluidkreislauf eines Thermomanagementsystems eines Fahrzeugs verbunden werden, um die Fluidverteilung innerhalb von diesem entsprechend anzusteuern. Der Fluidkreislauf, insbesondere Kühlwasserkreislauf, kann mehrere Teilkreisläufe umfassen, die entsprechend über das Thermomanagement-Modul 2 bzw. dessen Thermomanagement-Steuerungseinheit 5 fluidisch gesteuert werden. In einem Teilkreislauf kann hierbei beispielsweise eine Temperierung der Fahrzeug-Elektronik ermöglicht werden, in einem anderen Teilkreislauf eine Temperierung der Fahrzeugbatterie und in einem weiteren Teilkreislauf eine Temperierung des Fahrzeuginnenraums. Das Thermomanagement-Modul 2 dient dabei der Steuerung bzw. Regelung der Teilmassenströme in den einzelnen Teilkreisläufen des Fluidkreislaufs des Thermomanagementsystems des Fahrzeugs. Fahrzeug 300 kann hier ein batterieelektrisch betriebenes Fahrzeug, Elektrofahrzeug oder Brennstoffzellenfahrzeug sein, wie in Figur 8 skizziert.

Das Trägerteil 21 des Thermomanagement-Moduls 2 kann zur bauraumoptimierten und außerhalb eines Fahrzeugs 300 vormontierbaren Anordnung der einzelnen Komponenten, wie beispielsweise eines Ventils, zumindest eines Aktuators, zumindest einer Pumpe, zumindest eines Sensors etc. dienen, wobei nicht nur die elektrischen Verbindungsleitungen zwischen diesen Komponenten, sondern auch Fluidleitungen zwischen diesen auf und/oder in dem Trägerteil des Thermomanagement-Moduls 2 vormontiert werden können. Die auf dem Trägerteil vormontierte bzw. vorgefertigte Baugruppe des Thermomanagement-Moduls 2 kann an unterschiedlichen Stellen oder auch an mehreren Stellen in einem Fahrzeug angeordnet werden, wobei sich insbesondere eine möglichst nahe Anordnung an einem zu regulierenden Bauteil, wie beispielsweise einer Batterie im Unterboden oder im Heck eines Fahrzeugs eignet. Hierdurch können die Fluidwege so kurz wie möglich gehalten werden. Es können dementsprechend auch mehrere Thermomanagement-Module in einem Fahrzeug angeordnet werden.

Beispielsweise kann ein solches Thermomanagement-Modul 2 bzw. dessen Trägerteil 21 eine Kantenlänge von etwa 30 cm aufweisen und somit insbesondere der Trägerteil annähernd quadratisch ausgebildet sein. Selbstverständlich ist es ebenfalls möglich, das Thermomanagement-Modul 2 bzw. dessen Trägerteil auch anderweitig rechteckig oder beliebig anders zu formen. Ebenfalls sind größere Abmessungen möglich, z.B. wenn eine größere Anzahl von Komponenten, wie Pumpen, Sensoren, Aktuatoren, Ventile etc., darauf montiert werden sollen. Der Trägerteil 21 des Thermomanagement-Moduls 2 trägt vorteilhaft zumindest eine Pumpe und mindestens ein Ventil, insbesondere zumindest zwei Ventile, z.B. zumindest ein bis zehn Ventile. Der Trägerteil 21 des Thermomanagement-Moduls 2 umfasst weiter vorteilhaft Fluidleitungen bzw. Fluidkanäle, die in diesen integriert und/oder auf diesen aufgesetzt bzw. auf und/oder unter diesem angeordnet sein können, wie in Figur 7 zu sehen. Insbesondere weist das Thermomanagement-Modul 2 bzw. dessen Trägerteil 21 eine Fläche von bis zu einem halben Quadratmeter auf, insbesondere lediglich von einem Viertelquadratmeter. Es ist vorteilhaft eine kompakte Ausführung des Thermomanagement-Moduls 2 vorgesehen, das insbesondere die bereits genannte Flächenausdehnung von 30 cm x 30 cm oder z.B. von 40 cm x 40 cm oder 50 cm x 50 cm oder beliebige Zwischengrößen oder auch größere Abmessungen aufweisen kann, insbesondere eine Flächenausdehnung von 900 cm² bis 2.500 cm², bei großen elektrisch betriebenen oder Brennstoffzellen-Fahrzeugen eine Flächenausdehnung von bis zu 0,5 m². Das Thermomanagement-Modul 2 weist ferner beispielsweise eine Höhe von bis zu 40 cm auf. Die Anordnung des Thermomanagement-Moduls 2 bzw. von dessen Trägerteil im Raum kann beliebig sein, z.B. in etwa waagerechter Ausrichtung im Raum. Der zumindest eine Trägerteil wird insbesondere nahe unter der Motorhaube eines Fahrzeugs angeordnet. Dadurch sind die Fluidanschlusseinrichtungen des Thermomanagement-Moduls 2 gut zugänglich, so dass Fluidleitungen der Teilkreisläufe des Temperierkreislaufs an diese problemlos angeschlossen werden können.

In Figur 7 ist ein Beispiel für ein Trägerteil 21 des Thermomanagement-Moduls 2 gezeigt. Dieses ist teilweise gitterförmig ausgebildet. Hierdurch ist eine thermische Entkopplung einzelner Bereiche des Trägerteils 21 bzw. tragenden Strukturbauteils von anderen benachbarten Bereichen möglich, da über den jeweiligen gitterförmigen Bereich 22 des Trägerteils 21 wenig oder kaum Wärme übertragen wird/werden kann. Andere Bereiche des Trägerteils 21 können gezielt thermisch gekoppelt werden, wobei in diesen Bereichen dann beispielsweise keine gitterförmige Ausbildung des Trägerteils 21 vorgesehen wird. Bei dem Trägerteil 21 können Bereiche, die nicht fluidische Funktionen erfüllen sollen, gitterförmig ausgebildet.

Zum Anschließen von Fluidleitungen 125, 126, 127 der Kühl- bzw. Teilkreisläufe 201, 202, 203 eines Temperierkreislaufs des Fahrzeugs 300, wie in Figur 6 angedeutet, an das Thermomanagement-Modul 2 bzw. dessen Trägerteil 21 weist letzterer eine Anzahl an Fluidanschlusseinrichtungen 23, 24, 25, 240, 241, 242, 243, 244, 245, 246, 247, 248 auf. Zum Auffügen der Ventile und Pumpen auf den Trägerteil weist dieser zwei Aufnahmebereiche 26, 27 für jeweils eine Pumpe 10a, 10b und zwei Aufnahmebereiche 28, 29 für jeweils ein Ventil 12a, 12b auf. Zum Antreiben der Pumpen 10a, 10b und Ventile 12a, 12b sind jeweils Antriebswellen 226, 227 und 228, 229 vorgesehen, die etwa parallel zueinander und in Bezug zu den Trägerteil 21 etwa senkrecht zu diesem aus diesem herausragen. Die Pumpen 10a, 10b und Ventile 12a, 12b sind über Fluidkanäle 230, 231, 232, 233, 234 fluidisch mit den Fluidanschlusseinrichtungen 23, 24, 25 sowie den weiteren Fluidanschlusseinrichtungen 240 bis 248 auf der Oberseite des Trägerteils 21 und über elektrische Leiterpaare 17a, 17b bzw. elektrische Leiter 18a, 18b, die sich in oder auf dem Trägerteil 21 erstrecken (in Figur 7 lediglich angedeutet), mit der Thermomanagement-Steuerungseinheit 5 elektrisch verbunden.

Der in Figur 6 skizzierte Temperierkreislauf umfasst drei Teilkreisläufe 201, 202, 203, nämlich den ersten Kühl- bzw. Teilkreislauf 201, der zum Temperieren einer Batterie bzw. Fahrzeugs-/Traktionsbatterie 121 bzw. eines entsprechenden Batteriesystems dient, den zweiten Teilkreislauf 201, der zum Temperieren von Elektronikkomponenten 122 dient, und den dritten Teilkreislauf 203, der einen Wärmeübertrager 123 in einem vorderen Bereich eines Fahrzeugs 300 (siehe Figur 8) umfasst, der zur Wärmeaufnahme aus der Umgebungsluft und Wärmeabgabe an diese bzw. zur Wärmeübertragung der Wärme aus der Umgebungsluft in das Temperiermedium, das durch den dritten Teilkreislauf 203 strömt, und aus diesem zur Wärmeabgabe an die Umgebungsluft dient. Dieser dritte Teilkreislauf 203 ist somit der Komfortkreislauf, da er zur Klimatisierung des Innenraums des Fahrzeugs 300 dient, während der erste Teilkreislauf 201 zum Temperieren der Batterie bzw. Traktionsbatterie 121 des Fahrzeugs 300 dient und der zweite Teilkreislauf 202 zum Temperieren der zumindest einen Elektronikkomponente 122. Zur Temperierung des Innenraums des Fahrzeugs 300 kann hinter Lüftungsklappen im Dashboard des Fahrzeugs eine sog. HVAC (Heating Ventilation Air Conditioning Unit) eingesetzt werden, die im Wesentlichen zumindest zwei Wärmetauscher beinhaltet. Dies ist zum einen ein Heizungswärmetauscher, durch den Kühlwasser, insbesondere im Winter erwärmtes Kühlwasser, geleitet wird. Dieser Heizungswärmetauscher ist üblicherweise an den Komfortkreislauf gekoppelt, also an den dritten Teilkreislauf 203. Die für den Innenraum vorgesehene Luft bzw. Außen- oder Umgebungsluft strömt durch Ventilation über den Heizungswärmetauscher und wird dabei erwärmt. Die Wärme des Kühlwassers kann durch Abwärme verschiedener Fahrzeugkomponenten bereitgestellt werden, wobei die bei einem batterieelektrischen Fahrzeug (BEV) abfallende Wärmemenge jedoch meist nicht ausreichen wird, oder durch einen PTC-Zuheizer oder durch einen Wärmetauscher einer Wärmepumpe, was einen Betrieb eines Kältekreises im Umkehrbetrieb bedeutet bzw. ein Liefern erforderlicher Wärme durch die heiße Seite eines Kältekreises. Ferner kann dort ein Verdampfer des Kältekreislaufs angeordnet werden, der geeignet ist, nach dem gleichen Verfahren Luft zu kühlen. Außerdem kann auch ein dritter Wärmetauscher vorgesehen sein. Ein solcher kann ein Wärmetauscher einer Wärmepumpe sein, der Wärme bereitstellt. Alternativ kann Wärme direkt an die Luft übertragen werden oder Wärme wird dem Kühlkreislauf bereitgestellt und von diesem erfolgt ein Wärmeübertrag an die Luft. Der vorstehend erwähnte Verdampfer ist eine Komponente eines Kältemittelkreislaufes, in dem Kältemittel verdampft. Dabei wird Wärme durch das Kältemittel aufgenommen. Der Verdampfer kann einen Luftstrom in der HVAC-Einheit erwärmen. Ein Chiller ist neben dem Verdampfer eines Kältemittelkreislaufes ein weiterer Wärmetauscher an der sog. kalten Seite eines Kältemittelkreislaufes. Ein Chiller wird meist parallel, ggf. in Reihe, zu dem Verdampfer angeordnet und kühlt eine Komponente oder ein anderes Temperiermedium, wie Kühlwasser, ist nicht in der HVAC-Einheit angeordnet und kühlt keinen Luftstrom.

Es können somit zwei bis drei oder sogar mehr Wärmequellen und Wärmesenken in die einzelnen Teilkreisläufe integriert oder separat angeordnet werden. In Figur 6 ist somit der Minimalumfang an Teilkreisläufen 201, 202 und 203 eines solchen Temperierkreislaufs eines Fahrzeugs 300 zum Temperieren von dessen Komponenten gezeigt. Alle Teilkreisläufe 201, 202 und 203 des Temperierkreislaufs sind mit dem Thermomanagement-Modul 2 fluidisch verbunden. Über das Thermomanagement-Modul 2 können diese einzelnen Teilkreisläufe 201, 202 und 203 miteinander fluidisch verbunden bzw. voneinander getrennt werden. Zu diesem Zweck umfasst das Thermomanagement-Modul 2 die zumindest eine Pumpe und die zumindest zwei Ventile. Alle drei Teilkreisläufe 201, 202, 203 sind in sich geschlossen, es liegt somit kein Kurzschluss zwischen diesen vor.

In Figur 8 ist skizzenhaft eine Draufsicht auf das Fahrzeug 300 gezeigt, wobei dieses hier zwei Vorderräder 301, zwei Hinterräder 302, einen vorderen Fahrzeugbereich 303 mit Wärmeübertrager 123 und Inverter 128, im Bereich des einen Vorderrades 301 Chiller 129 und einen Temperiermediumtank 130, z.B. Kühlmitteltank, im Bereich des anderen Vorderrades 301 einen PTC-Zuheizer 131, im Übergang vom vorderen Fahrzeugbereich 303 in einen mittleren Fahrzeugbereich 304 das Thermomanagement-Modul 2 der Thermomanagementanordnung 1, im mittleren Fahrzeugbereich 304 die Batterie 121 und im hinteren Fahrzeugbereich 305 einen Elektromotor 132 mit Leistungselektronik 133 und Charger 134 umfasst. Erkennbar erstreckt sich eine Anzahl von Fluidleitungen der einzelnen Teilkreisläufe des Temperierkreislaufs des Fahrzeugs 300 zwischen dem Thermomanagement-Modul 2 und den einzelnen vorstehend genannten Fahrzeugkomponenten. Auf dem Thermomanagement-Modul 2 sind zwei Pumpen 10a, 10b und zwei Ventile 12a, 12b aufgenommen zur Förderung des Temperiermediums und zur Regelung der Massenströme an Temperiermedium in den einzelnen Teilkreisläufen des Temperierkreislaufs. Auf dem Thermomanagement-Modul 2 ist die Thermomanagement-Steuerungseinheit 5 angeordnet. Von den beiden Pumpen 10a, 10b und beiden Ventile 12a, 12b erstrecken sich die elektrischen Leiterpaar 17a, 17b und elektrischen Leiter 18a, 18b zu der Thermomanagement-Steuerungseinheit 5 und sind an diese zur Daten- und Signalübertragung angeschlossen. An die Thermomanagement-Steuerungseinheit 5 ist ferner der elektrische Leiterstrang 3 angeschlossen, der sich zu der Fahrzeugsteuerungseinheit 4 im hinteren Fahrzeugbereich 305 erstreckt.

Der Trägerteil 21 des Thermomanagement-Moduls 2 ist in den in den Figuren gezeigten Ausführungsvarianten als Spritzgussteil ausgebildet, so dass beliebige Ausführungsvarianten kostengünstig hergestellt werden können. Ein Bestücken des Trägerteils 21 mit den entsprechenden Fluidkomponenten in Form von Pumpen und Ventilen bzw. Standard-Pumpen und Standard-Ventilen, Sensoren, Aktoren kann unabhängig von der anwendungsspezifisch optimierten Formgebung des Trägerteils 21, insbesondere von einer Seite aus, problemlos erfolgen.

Es kann somit lediglich eine elektrische Verbindung über den elektrischen Leiterstrang 3, der zwischen der Fahrzeugsteuerungseinheit 4 und der Thermomanagement-Steuerungseinheit 5 bzw. dem Thermomanagement-Modul 2 angeordnet ist, vorgesehen werden. Es entsteht somit bezüglich des Thermomanagement-Moduls 2 eine autarke Einheit, die an einer geeigneten Stelle in einem Fahrzeug angeordnet werden kann, insbesondere zentral in dem Fahrzeug, und die die elektronisch geregelten und/oder elektrischen Komponenten eines Thermomanagementsystems, somit die elektronisch geregelten und/oder elektrischen Komponenten, die bei einem Thermomanagementsystem entlang von Kühlkreisläufen zur Temperierung von Fluid, wie Kühlmittel, angeordnet sind, umfasst.

Neben den im Vorstehenden beschriebenen und in den Figuren gezeigten Ausführungsvarianten einer Thermomanagementanordnung für ein Fahrzeug können noch zahlreiche weitere gebildet werden, insbesondere auch beliebige Kombinationen der vorstehend genannten Merkmale, wobei jeweils eine Anzahl elektronisch geregelter und/oder elektronischer Komponenten, wie Pumpen, Aktuatoren, Ventilen, Sensoren, als Baugruppe in räumlicher Nähe zueinander angeordnet und als zumindest ein Thermomanagement-Modul zusammengefasst sind und eine Thermomanagement-Steuerungseinheit vorgesehen ist, die im Bereich des Thermomanagement-Moduls angeordnet ist und zur Ansteuerung zumindest eines Teils der Anzahl elektronisch geregelter und/oder elektrischer Komponenten dient.

### Bezugszeichenliste

- 1: Thermomanagementanordnung
- 2: Thermomanagement-Modul
- 3: elektrischer Leiterstrang
- 4: Fahrzeugsteuerungseinheit
- 5: Thermomanagement-Steuerungseinheit
- 10a: Pumpe
- 10b: Pumpe
- 10n: Pumpe
- 11a: Aktuator
- 11b: Aktuator
- 11n: Aktuator
- 12a: Ventil
- 12b: Ventil
- 13a: Sensor
- 13b: Sensor
- 13n: Sensor
- 14a: elektrisches Leiterpaar
- 14b: elektrisches Leiterpaar
- 14n: elektrisches Leiterpaar
- 15a: elektrischer Leiter
- 15b: elektrischer Leiter
- 15n: elektrischer Leiter
- 16a: elektrisches Leiterpaar
- 16b: elektrisches Leiterpaar
- 16n: elektrisches Leiterpaar
- 17a: elektrisches Leiterpaar
- 17b: elektrisches Leiterpaar
- 18a: elektrischer Leiter
- 18b: elektrischer Leiter
- 20: elektrischer Sammelverbinder
- 21: Trägerteil
- 22: gitterförmiger Bereich
- 23: Fluidanschlusseinrichtung
- 24: Fluidanschlusseinrichtung
- 25: Fluidanschlusseinrichtung
- 26: Aufnahmebereich für Pumpe
- 27: Aufnahmebereich für Pumpe
- 28: Aufnahmebereich für Ventil
- 29: Aufnahmebereich für Ventil
- 30: elektrischer Verbinder
- 31: elektrischer Verbinder
- 32: elektrischer Leiter
- 33: elektrischer Leiter
- 34: elektrischer Leiter
- 40: elektrischer Sammelverbinder
- 50: Hauptsteuerungseinheit/Mikrocontroller
- 51: Kommunikationseinrichtung
- 52: Signalverarbeitungseinrichtung
- 53: Stufensteuerungseinrichtung
- 54: Einheit
- 55: Sensorelektronikeinheit für Eingabe-/Ausgabe-Pins
- 56: Aktuator-Leistungsstufe
- 57: Pumpenleistungsstufe
- 58a: Signal- bzw. Datenleitung
- 58b: Signal- bzw. Datenleitung
- 58c: Signal- bzw. Datenleitung
- 58d: Signal- bzw. Datenleitung
- 59a: elektrische Leitung
- 59b: elektrische Leitung
- 59c: elektrische Leitung
- 59d: elektrische Leitung
- 59e: elektrische Leitung
- 100: erster Kühlkreislauf
- 101: zweiter Kühlkreislauf
- 102: dritter Kühlkreislauf
- 103: elektrischer Leiter
- 104: Fahrzeugsteuerungseinheit
- 105: Pumpe
- 106: Aktuator
- 107: Sensor
- 108: elektrischer Leiter
- 109: elektrischer Leiter
- 110: Thermomanagementsystem
- 111: elektrischer Sammelverbinder
- 112: elektrischer Verbinder
- 113: elektrischer Verbinder
- 114: elektrischer Verbinder
- 115: Steuerungseinheit
- 116: Steuerungseinheit
- 117: Steuerungseinheit
- 118: Ventil
- 119: Steuerungseinheit
- 120: Sensor
- 121: Batterie/Traktionsbatterie
- 122: Elektronikkomponente
- 123: Wärmeübertrager
- 125: Fluidleitung
- 126: Fluidleitung
- 127: Fluidleitung
- 128: Inverter
- 129: Chiller
- 130: Temperiermediumtank
- 131: PTC-Zuheizer
- 132: Elektromotor
- 133: Leistungselektronik
- 134: Charger
- 201: erster Teilkreislauf
- 202: zweiter Teilkreislauf
- 203: dritter Teilkreislauf
- 226: Antriebswelle
- 227: Antriebswelle
- 228: Antriebswelle
- 229: Antriebswelle
- 230: Fluidkanal
- 231: Fluidkanal
- 232: Fluidkanal
- 233: Fluidkanal
- 234: Fluidkanal
- 240: Fluidanschlusseinrichtung
- 241: Fluidanschlusseinrichtung
- 242: Fluidanschlusseinrichtung
- 243: Fluidanschlusseinrichtung
- 244: Fluidanschlusseinrichtung
- 245: Fluidanschlusseinrichtung
- 246: Fluidanschlusseinrichtung
- 247: Fluidanschlusseinrichtung
- 248: Fluidanschlusseinrichtung
- 300: Fahrzeug
- 301: Vorderrad
- 302: Hinterrad
- 303: vorderer Fahrzeugbereich
- 304: mittlerer Fahrzeugbereich
- 305: hinterer Fahrzeugbereich
- K: Knotenpunkt
- K1: Knotenpunkt
- K2: Knotenpunkt
- K3: Knotenpunkt
- K4: Knotenpunkt

## Patentansprüche

1. Thermomanagementanordnung (1) für ein Fahrzeug, umfassend eine Anzahl elektronisch geregelter und/oder elektrischer Komponenten (10a, 10b, 10n, 11a, 11b, 11n, 12a, 12b, 13a, 13b, 13n) und zumindest eine Fahrzeugsteuerungseinheit (4), wobei zumindest ein Teil der Anzahl elektronisch geregelter und/oder elektrischer Komponenten (10a, 10b, 10n, 11a, 11b, 11n, 12a, 12b, 13a, 13b, 13n) ansteuerbar ist,
**dadurch gekennzeichnet, dass**
die Thermomanagementanordnung (1) zumindest ein Thermomanagement-Modul (2) umfasst, das die Anzahl elektronisch geregelter und/oder elektrischer Komponenten (10a, 10b, 10n, 11a, 11b, 11n, 12a, 12b, 13a, 13b, 13n), die als eine Baugruppe in räumlicher Nähe zueinander angeordnet sind, umfasst, und dass
eine Thermomanagement-Steuerungseinheit (5) vorgesehen ist, die im Bereich des Thermomanagement-Moduls (2) angeordnet ist und zur Ansteuerung zumindest eines Teils der Anzahl elektronisch geregelter und/oder elektrischer Komponenten (10a, 10b, 10n, 11a, 11b, 11n, 12a, 12b, 13a, 13b, 13n) dient.

2. Thermomanagementanordnung (1) nach Anspruch 1,
**dadurch gekennzeichnet, dass**
die Thermomanagement-Steuerungseinheit (5) in das zumindest eine Thermomanagement-Modul (2) integriert ist.

3. Thermomanagementanordnung (1) nach Anspruch 1 oder 2,
**dadurch gekennzeichnet, dass**
die Thermomanagement-Steuerungseinheit (5) mit der zumindest einen Fahrzeugsteuerungseinheit (4) zur Kommunikation mit dieser signalverbindbar oder signalverbunden und durch diese ansteuerbar ist, insbesondere zumindest eine digitale Kommunikationsbusleitung zur Signalverbindung der Thermomanagement-Steuerungseinheit (5) und der zumindest einen Fahrzeugsteuerungseinheit (4) vorgesehen ist.

4. Thermomanagementanordnung (1) nach einem der vorstehenden Ansprüche,
**dadurch gekennzeichnet, dass**
die Thermomanagement-Steuerungseinheit (5) einen eigenen Regelalgorithmus zur Mediumverteilung zu und von der Anzahl elektronisch geregelter und/oder elektrischer Komponenten (10a, 10b, 10n, 11a, 11b, 11n, 12a, 12b, 13a, 13b, 13n) und zwischen diesen umfasst.

5. Thermomanagementanordnung (1) nach einem der vorstehenden Ansprüche,
**dadurch gekennzeichnet, dass**
zur Energieversorgung der Thermomanagement-Steuerungseinheit (5) diese mit zumindest einer Energiequelle, insbesondere dem Bordnetz eines Fahrzeugs, elektrisch verbindbar oder verbunden ist.

6. Thermomanagementanordnung (1) nach einem der vorstehenden Ansprüche,
**dadurch gekennzeichnet, dass**
zumindest eine außerhalb der Thermomanagementanordnung (1) angeordnete elektronisch geregelte Komponente mit der Thermomanagement-Steuerungseinheit (5) signalverbindbar oder signalverbunden ist zum Ansteuern der zumindest einen außerhalb der Thermomanagementanordnung (1) angeordneten elektronisch geregelten Komponente durch die Thermomanagement-Steuerungseinheit (5).

7. Thermomanagementanordnung (1) nach einem der vorstehenden Ansprüche,
**dadurch gekennzeichnet, dass**
die Thermomanagement-Steuerungseinheit (5) zum Ansteuern zumindest eines Aktuators (11a, 11b, 11n) und/oder zumindest eines Ventils (12a, 12b) und/oder zumindest eines Sensors (13a, 13b, 13n) und/oder zumindest einer Pumpe (10a, 10b, 10n) ausgebildet ist.

8. Thermomanagementanordnung (1) nach einem der vorstehenden Ansprüche,
**dadurch gekennzeichnet, dass**
das zumindest eine Thermomanagement-Modul (2) als elektronisch geregelte und/oder elektrische Komponenten zumindest eine Pumpe mit Elektromotor und zumindest ein Ventil mit Aktuator umfasst, insbesondere zumindest eine Pumpe mit Elektromotor, zumindest ein Ventil mit Aktuator und zumindest einen Sensor, wobei diese elektronisch geregelten und/oder elektrischen Komponenten (10a, 10b, 10n, 11a, 11b, 11n, 12a, 12b, 13a, 13b, 13n) in baulicher Einheit und/oder auf oder an zumindest einer mit fluidischen Leitern, insbesondere Fluidkanälen (230, 231, 232, 233, 234), und fluidischen Anschlüssen (23, 24, 25, 240, 241, 242, 243, 244, 245, 246, 247, 248) versehenen Einheit zum Versorgen fluidischer Komponenten des Thermomanagement-Moduls (2) mit zumindest einem fluidischen Medium angeordnet sind.

9. Thermomanagementanordnung (1) nach einem der vorstehenden Ansprüche,
**dadurch gekennzeichnet, dass**
das zumindest eine Thermomanagement-Modul (2) mit einem elektrischen Sammelverbinder (20) versehen ist, wobei die Anzahl elektronisch geregelter und/oder elektrischer Komponenten (10a, 10b, 10n, 11a, 11b, 11n, 12a, 12b, 13a, 13b, 13n) des Thermomanagement-Moduls (2) elektrisch mit dem elektrischen Sammelverbinder (20) des zumindest einen Thermomanagement-Moduls (2) verbindbar oder verbunden ist und ein elektrischer Leiterstrang (3) zwischen dem elektrischen Sammelverbinder (20) des zumindest einen Thermomanagement-Moduls (2) und/oder der Thermomanagement-Steuerungseinheit (5) und der Fahrzeugsteuerungseinheit (4) anordbar oder angeordnet ist.

10. Thermomanagementanordnung (1) nach Anspruch 9,
**dadurch gekennzeichnet, dass**
die Thermomanagement-Steuerungseinheit (5) in den elektrischen Sammelverbinder (20) integriert oder an diesem angeordnet oder im Bereich von dessen elektrischen Sammelverbinder (20) angeordnet ist.

11. Thermomanagementanordnung (1) nach einem der vorstehenden Ansprüche,
**dadurch gekennzeichnet, dass**
zur elektrische Energieversorgung zumindest eines Teils der elektronisch geregelten und/oder elektrischen Komponenten (10a, 10b, 10n, 11a, 11b, 11n, 12a, 12b, 13a, 13b, 13n) des Thermomanagement-Moduls (2) und/oder der Thermomanagement-Steuerungseinheit (5) das Thermomanagement-Modul (2) mit zumindest einem zusätzlichen elektrischen Verbinder versehen und zumindest eine elektrische Stromleitung an diesen anschließbar oder angeschlossen ist.

12. Fahrzeug (300), insbesondere Elektrofahrzeug, batterieelektrisches Fahrzeug oder Brennstoffzellenfahrzeug,
**dadurch gekennzeichnet, dass**
das Fahrzeug (300) zumindest eine Thermomanagementanordnung (1) nach einem der vorstehenden Ansprüche umfasst.
